# EUROPEAN PATENT APPLICATION

(11) **EP 3 113 087 A1**
(43) Date of publication of application: **04.01.2017**
(21) Application number: 15755073.2
(22) Date of filing: 20.01.2015
(51) Int. Cl.: G06Q 10/00, G06Q 10/06

(54) **PERSONNEL EXPENSE SIMULATION SYSTEM, PERSONNEL EXPENSE SIMULATION METHOD, AND PERSONNEL EXPENSE SIMULATION PROGRAM**

(30) Priority: 26.02.2014 JP 2014035575
(71) Applicant: Nittsu System Co., Ltd., Nagoya-shi, Aichi 460-0008 (JP)
(72) Inventor: KAMURA, Minoru, Nagoya-shi Aichi 460-0008 (JP)
(74) Representative: Groth & Co. KB
(86) International application number: PCT/JP2015/051313
(87) International publication number: WO 2015/129339

(57) **Abstract**

A personnel expense simulation system, a personnel expense simulation method, and a personnel expense simulation program for effectively estimating personnel expenses are provided. A control section (21) of a personnel expense analysis apparatus (20) obtains a calculation time period and performs a process for obtaining all individual information. Next, the control section (21) performs a process for obtaining organization structure list information for the calculation time period. Furthermore, the control section (21) performs a process for obtaining salary raise setting of each organization and salary raise setting per individual for the calculation time period. Then, the control section (21) performs, for each individual, a process for estimating individual wage payment in the calculation time period, and a process for calculating the insurance premium. Furthermore, the control section (21) performs an allocation process between main duty and additional duty, and performs an output process.

## Description

The present invention relates to a personnel expense simulation system, a personnel expense simulation method, and a personnel expense simulation program for estimating future personnel expenses.

### BACKGROUND ART

Various systems are used in companies to manage sales and expenses. Companies require adequate human resources to be highly competitive. To this end, a system that allows centralized management of personnel information has been developed (see, for example, Non-Patent Document 1). Further, a work management system that automatically computes salary management and attendance information of personnel has been developed (see, for example, Non-Patent Documents 2 and 3). Furthermore, a technique to smoothly manage personnel systems has been contemplated (see, for example, Patent Document 1). The server described in Patent Document 1 functions to facilitate personnel system management. In addition, when issuing personnel changes that involve salary raise, the simulation section performs personnel expense simulation on a web page.

### PRIOR ART DOCUMENTS

### Patent Document

Patent Document 1: Japanese Laid-Open Patent Publication No. 2004-348285

### Non-Patent Documents

Non-Patent Document 1: Nittsu System Co,. Ltd., "Kinjiro Enterprise Jinjiro ∼ Jinji solution ∼," [online], Nittsu System Co,. Ltd. web page, [Retrieved on February 11, 2014], Internet <http://www.nittsusystem.co.jp/home/jinji/index.asp>
Non-Patent Document 2: Nittsu System Co,. Ltd., "Kinjiro Enterprise Qtaro ∼ Kyuuyo solution ∼," [online], Nittsu System Co,. Ltd. web page, [Retrieved on February 11, 2014], Internet <http://www.nittsusystem.co.jp/home/qtarou/index.asp>
Non-Patent Document 3: Nittsu System Co,. Ltd., "Kinjiro Enterprise Kinjiro ∼ Shugyou solution ∼," [online], Nittsu System Co,. Ltd. web page, [Retrieved on February 11, 2014], Internet <http://www.nittsusystem.co.jp/home/kinjirou/index.asp>

### SUMMARY OF THE INVENTION

### Problems that the Invention is to Solve

Managing personnel expenses can increase competitiveness and productivity of human resources. In addition, companies need to reduce the required labor costs. To estimate future costs, the labor costs from past to present need to be accurately identified. The personnel expenses paid by a company include premiums for various insurances, such as social insurance and labor insurance, in addition to salaries. Companies perform structural changes such as personnel changes and organizational changes according to their management strategies. Such structural changes need to be considered to estimate personnel expenses. However, when there are a large number of employees, the calculation of personnel expenses may be time-consuming and inefficient.

It is an objective of the present invention to provide a personnel expense simulation system, a personnel expense simulation method, and a personnel expense simulation program for efficiently estimating personnel expenses.

### Means for Solving the Problems

(1) To achieve the foregoing objective, a personnel expense simulation system includes an attribute information storage section that stores assignment division information of each employee in an organization, a past salary information storage section that stores salary payment history information of each employee, and a control section that calculates an estimated amount of future personnel expenses. The personnel expense simulation system is characterized in that the control section: identifies, for each employee who belongs to an organization including a plurality of divisions, an assignment division to which the employee belongs in a calculation time period; calculates an estimated salary amount in the calculation time period based on salary raise information and salary payment history information of the employee in the assignment division; calculates an estimated amount of insurance premium to be paid by an employer based on an estimated payment in the calculation time period; and calculates an estimated amount of personnel expenses in the calculation time period for each assignment division based on the estimated salary amount and the estimated amount of insurance premium. This allows personnel expenses including salaries and insurance premiums to be calculated for each division of organization.
(2) The personnel expense simulation system further includes a salary raise setting information storage section that stores salary raise setting information of each employee and salary raise setting information of each division. When the control section obtains individual salary raise setting information of the employee, the control section preferably calculates an estimated salary amount of the employee based on the salary raise setting information. When the control section fails to obtain the individual salary raise setting information, the control section preferably identifies a division to which the employee belongs using the attribute information storage section and calculates an estimated salary amount of the employee using salary raise setting information of the division. This allows for individual setting using a salary raise setting of each employee and collective setting using a salary raise setting of each organization.
(3) The personnel expense simulation system further includes an organization information storage section that stores hierarchically organized division information. When the control section calculates an estimated salary amount using salary raise information to which the employee belongs, the control section preferably identifies a division to which the employee belongs in sequence from a lower layer using the organization information storage section, and calculates an estimated salary amount using salary raise information of a division in a lower-most layer for which salary raise information is recorded. Thus, salary raise setting can be made considering the status of each division in a hierarchical organization.
(4) In the personnel expense simulation system, the attribute information storage section stores an issue date and an end date of assignment. The control section preferably computes an organization structure in a calculation target month based on the issue date and the end date. The control section preferably calculates an estimated salary amount based on the organization structure. This allows personnel expenses to be estimated with consideration given to organizational changes.
(5) In the personnel expense simulation system, the control section preferably calculates an amount of increase in insurance premium by multiplying an amount of salary raise of each employee by a social insurance premium rate and calculates an employer share amount by adding the amount of increase to an actual paid amount of social insurance premium of the employee. Thus, insurance premiums can be efficiently calculated with consideration given to salary raise and using past payment of insurance premiums.
(6) In the personnel expense simulation system, when the control section identifies an individual share amount of social insurance premium of each employee in the past salary information storage section, the control section preferably uses the individual share amount as an employer share amount. As such, the employer share amount can be efficiently calculated using the individual share amount.
(7) In the personnel expense simulation system, the attribute information storage section stores, for an employee who concurrently works for a plurality of assignment divisions, concurrent duty proportion information of the assignment divisions. The control section preferably uses the concurrent duty proportion information to appropriately allocate the estimated amount of personnel expenses to the assignment divisions. This allows personnel expenses to be estimated with consideration given to concurrent duties.
(8) In the personnel expense simulation system, the control section preferably identifies an employee who belongs to each organization using assignment division information stored in the attribute information storage section, obtains salary payment history information of the employee from the past salary information storage section, and compiles and outputs past salary information of each assignment division. This allows for the comprehension of past conditions to estimate personnel expenses.

### EFFECTS OF THE INVENTION

The present invention allows for estimation and management of personnel expenses of employees.

### BRIEF DESCRIPTION OF THE DRAWINGS

Fig. 1 is a schematic diagram of a system of an embodiment.
Fig. 2A is a diagram showing the data stored in an analysis pattern information storage section used in the embodiment.
Fig. 2B is a diagram showing the data stored in a company setting master storage section used in the embodiment.
Fig. 2C is a diagram showing the data stored in a parameter master storage section used in the embodiment.
Fig. 2D is a diagram showing the data stored in a payment item master storage section used in the embodiment.
Fig. 2E is a diagram showing the data stored in an organization master storage section used in the embodiment.
Fig. 3A is a diagram showing the data stored in a salary raise setting-organization information storage section used in the embodiment.
Fig. 3B is a diagram showing the data stored in a salary raise setting-individual information storage section used in the embodiment.
Fig. 3C is a diagram showing the data stored in an individual basic information storage section used in the embodiment.
Fig. 3D is a diagram showing the data stored in an individual assignment information storage section used in the embodiment.
Fig. 3E is a diagram showing the data stored in an individual job position information storage section used in the embodiment.
Fig. 3F is a diagram showing the data stored in an individual employment information storage section used in the embodiment.
Fig. 4A is a diagram showing the data stored in an individual work information storage section used in the embodiment.
Fig. 4B is a diagram showing the data stored in an individual social insurance information storage section used in the embodiment.
Fig. 4C is a diagram showing the data stored in a past salary information storage section used in the embodiment.
Fig. 4D is a diagram showing the data stored in an analysis result storage section used in the embodiment.
Fig. 5 is a diagram showing a process sequence of the embodiment.
Fig. 6 is a diagram showing a process sequence of the embodiment.
Fig. 7 is a diagram showing a process sequence of the embodiment.
Fig. 8 is a diagram showing a process sequence of the embodiment.
Fig. 9 is a diagram showing a process sequence of the embodiment.
Fig. 10 is a diagram showing a process sequence of the embodiment.
Fig. 11 is a diagram showing a process sequence of the embodiment.
Fig. 12A is a diagram showing the data stored in a staff increase master storage section used in a modification.
Fig. 12B is a diagram showing the data stored in a monthly amount master storage section used in the modification.
Fig. 13 is a diagram showing a process sequence of the modification.

### MODES FOR CARRYING OUT THE INVENTION

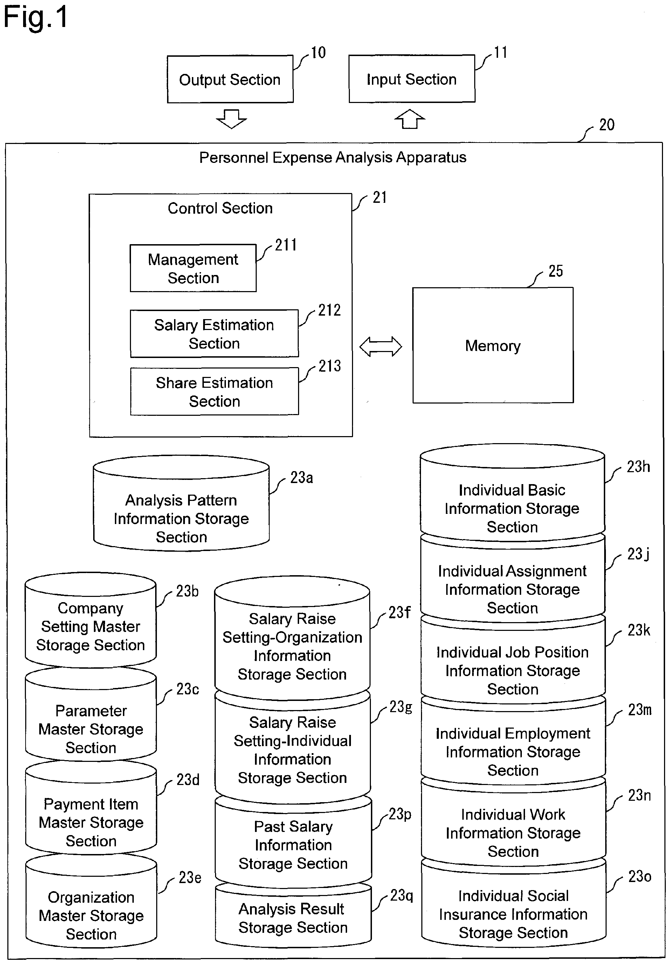

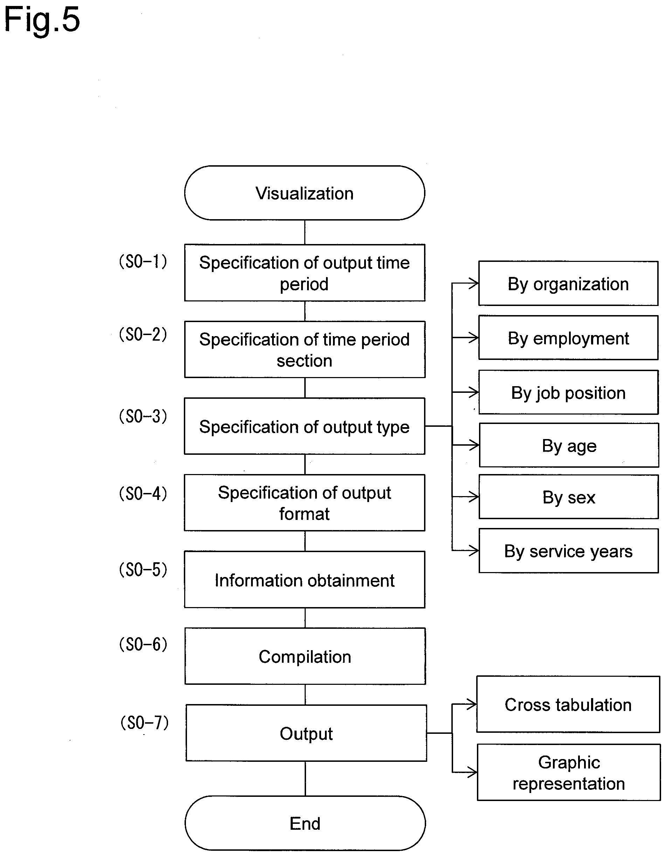

Referring to Figs. 1 to 11, one embodiment of a personnel expense simulation system, a personnel expense simulation method, and a personnel expense simulation program will now be described. In this embodiment, personnel expenses are simulated by estimating future salaries and insurance premiums of employees.

As shown in Fig. 1, the present embodiment uses a personnel expense analysis apparatus 20, which serves as a personnel expense simulation system, to simulate personnel expenses.

The personnel expense analysis apparatus 20 includes an output section 10 and an input section 11. The output section 10 is a means for outputting various information and includes a display, for example. The input section 11 is a means for inputting various information and includes a key board, pointing device, and input interface for obtaining data from recording media, for example.

The personnel expense analysis apparatus 20 is a computer system for personnel expense simulation. The personnel expense analysis apparatus 20 includes a control section 21 and a memory 25. The personnel expense analysis apparatus 20 also includes an analysis pattern information storage section 23a, a company setting master storage section 23b, a parameter master storage section 23c, a payment item master storage section 23d, and an organization master storage section 23e. The personnel expense analysis apparatus 20 further includes a salary raise setting-organization information storage section 23f and a salary raise setting-individual information storage section 23g, which store information on salary raise. Furthermore, the personnel expense analysis apparatus 20 includes an individual basic information storage section 23h, an individual assignment information storage section 23j, an individual job position information storage section 23k, and an individual employment information storage section 23m, which serve as attribute information storage sections that store attribute information (attribute items and attribute values) of each employee. The personnel expense analysis apparatus 20 also includes an individual work information storage section 23n, an individual social insurance information storage section 23o, a past salary information storage section 23p, and an analysis result storage section 23q.

The control section 21 includes a control means including a CPU and memory, such as RAM and ROM, and performs personnel expense simulation. The control section 21, which runs a personnel expense simulation program, functions as a management section 211, a salary estimation section 212, and a share estimation section 213.

The management section 211 obtains data for simulation from various storage sections.

The salary estimation section 212 calculates payments such as salaries of employees.

The share estimation section 213 calculates the employer share amount of insurances premiums for employees.

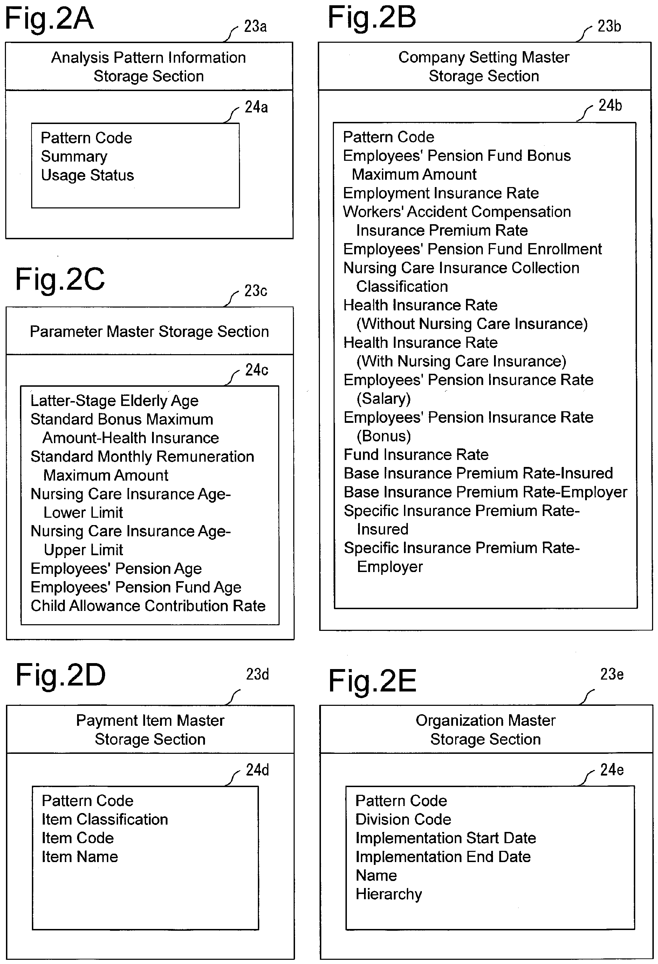

As shown in Fig. 2A, the analysis pattern information storage section 23a stores analysis pattern records 24a of patterns used for personnel expense simulation. An analysis pattern record 24a is recorded when each pattern is registered. The analysis pattern record 24a includes data on the pattern code, summary, and usage status.

The pattern code data area stores data on the identifier for identifying the pattern used in personnel expense simulation.

The summary data area stores data on the summary of the pattern.

A usage status data area stores data on the calculation status of the pattern. When personnel expense simulation of the pattern ends, a calculation completion flag is set in this area.

As shown in Fig. 2B, the company setting master storage section 23b stores company setting master records 24b used for companies that are subject to personnel expense simulation. A company setting master record 24b is recorded when a company that is subject to personnel expense simulation is registered. The company setting master record 24b includes data for calculating various insurance premiums associated with the pattern code.

The pattern code data area stores data on the identifier for identifying the pattern used in personnel expense simulation. The data described below is stored for each pattern.

The employees' pension fund bonus maximum amount data area stores data on the bonus maximum amount for employees' pension fund (1.5 million yen).

The employment insurance rate data area stores data on the employment insurance rate according to the Employment Insurance Law. The workers' accident compensation insurance premium rate data area stores data on the workers' accident compensation insurance premium rate according to the Workers' Accident Compensation Insurance Act.

The employees' pension fund enrollment data area stores a flag indicating enrollment or non-enrollment in the employees' pension fund plan.

The nursing care insurance collection classification data area stores data on the nursing care insurance collection classification for identifying the collection time (current month or next month).

The health insurance rate (without nursing care insurance) data area and the health insurance rate (with nursing care insurance) data area store data on the insurance premium rates according to the Health Insurance Act with and without a nursing care insurance, respectively. In the present embodiment, an individual and the employer share the premiums equally, and the insurance premium rates are not differentiated between men and women.

The employees' pension insurance rate (salary) data area and the employees' pension insurance rate (bonus) data area store data on the employees' pension insurance premium rates for salary and bonus, respectively, according to the Employees' Pension Insurance Act. In the present embodiment, an individual and the employer share the premiums equally, and the insurance premium rates are not differentiated between men and women.

The fund insurance rate data area stores data on the employees' pension fund insurance rate of the pattern.

The base insurance premium rate-insured person data area stores data on the base insurance premium rate for the insured person.

The base insurance premium rate-employer data area stores data on the base insurance premium rate for the employer.

The specific insurance premium rate-insured person data area stores data on the specific insurance premium rate for the insured person for medical treatment for the elderly.

The specific insurance premium rate-employer data area stores data on the specific insurance premium rate for the employer.

As shown in Fig. 2C, the parameter master storage section 23c stores parameter master records 24c of parameters for personnel expense simulation. A parameter master record 24c is recorded when each parameter is registered. The parameter master record 24c includes data on the latter-stage elderly age, standard bonus maximum amount-health insurance, standard monthly remuneration maximum amount, nursing care insurance age-lower limit, nursing care insurance age-upper limit, employees' pension age, employees' pension fund age, and child allowance contribution rate.

The latter-stage elderly age data area stores data on the age for identify latter-stage elderly persons.

The standard bonus maximum amount-health insurance data area stores data on the maximum amount of standard bonus to which the health insurance premium rate applies (5.4 million yen).

The standard monthly remuneration maximum amount data area stores data on the standard monthly remuneration for calculation of the maximum amounts of health insurance premium and employees' pension insurance premium.

The nursing care insurance age-lower limit data area and the nursing care insurance age-upper limit data area store data on the lower limit and upper limit, respectively, of the age eligible for a secondary insured person of the nursing care insurance. An individual who reaches the "nursing care insurance age-upper limit" becomes a primary insured person.

The employees' pension age data area stores data on the age at which an individual loses qualification for the employees' pension insurance (70 years old).

The employees' pension fund age data area stores data on the age at which payment of the pension of employees' pension fund starts.

The child allowance contribution rate data area stores data on the percentage for calculating the child allowance contribution paid by the employer (0.15%). The payment is multiplied by the child allowance contribution rate to obtain the child allowance contribution amount.

As shown in Fig. 2D, the payment item master storage section 23d stores payment item master records 24d of attributes of employees. A payment item master record 24d is recorded when individual information of an employee is obtained. The payment item master record 24d includes the pattern code, item classification, item code, and item name.

The pattern code data area stores data on the identifier for identifying the pattern used in personnel expense simulation. The following data is stored for each pattern.

The item classification data area stores data on the classification for identifying the item type.

The item code data area stores data on the identifier for identifying the payment item.

The item name data area stores data on the payment item name. In this embodiment, item names include "allowance," "deduction," "attendance," "extra wage," "note," and "extra wage unit rate."

As shown in Fig. 2E, the organization master storage section 23e stores organization master records 24e of organizations of the company. An organization master record 24e is recorded when division (organization) structure information is obtained from the personnel system (not shown). The organization master record 24e includes data on the pattern code, division code, implementation start date, implementation end date, name, and hierarchy.

The pattern code data area stores data on the identifier for identifying the pattern used in personnel expense simulation. The following data is stored for each pattern.

The division code data area stores data on the identifier for identifying the division in the pattern.

The implementation start date data area and the implementation end date data area store data on the start date and end date, respectively, of the division.

The name data area stores data on the name of the division.

The hierarchy data area stores data on the hierarchy of the division. The hierarchy indicates divisions that are superior or subordinate to the division. The upper level organizations can be identified from the lower level to which the employee belongs.

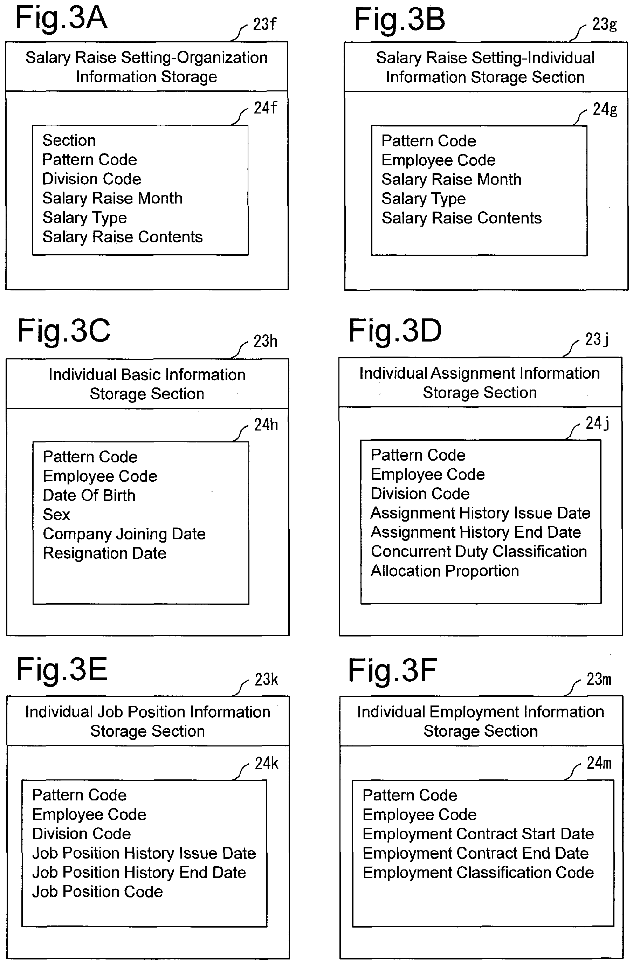

As shown in Fig. 3A, the salary raise setting-organization information storage section 23f stores salary raise setting-organization records 24f used for collectively determining the amount of salary raise in each organization. A salary raise setting-organization record 24f is recorded when a salary raise setting is registered for an organization. The salary raise setting-organization record 24f includes data on the pattern code, division code, salary raise month, salary type, and salary raise contents.

The pattern code data area stores data on the identifier for identifying the pattern used in personnel expense simulation. The following data is stored for each pattern.

The division code data area stores data on the identifier for identifying the organization for which salary raise is set.

The salary raise month data area stores data on the month of salary raise.

The salary type data area stores a flag indicating salary or bonus.

The salary raise contents data area stores data on the calculation method for determining the amount of salary raise. The salary raise contents data area includes the salary raise rate, salary raise amount, payment, number of months of base salary (for bonus), and the like.

As shown in Fig. 3B, the salary raise setting-individual information storage section 23g stores salary raise setting-individual records 24g of attributes of employees. A salary raise setting-individual record 24g is recorded when a salary raise setting is registered for an employee. The salary raise setting-individual record 24g includes data on the pattern code, employee code, salary raise month, salary type, and salary raise contents.

The pattern code data area stores data on the identifier for identifying the pattern used in personnel expense simulation. The following data is stored for each pattern.

The employee code data area stores data on the identifier for identifying the employee.

The salary raise month data area stores data on the month and year of salary raise.

The salary type data area stores a flag indicating salary or bonus.

The salary raise contents data area stores data on the calculation method for determining the amount of salary raise. The salary raise contents include allowance items and information for identifying the formula for calculating salary raise for each allowance item. Allowance items include weighting allowance, qualification allowance, executive allowance, and personnel evaluation.

As shown in Fig. 3C, the individual basic information storage section 23h stores individual basic records 24h of basic attributes of employees. An individual basic record 24h is recorded when individual information of an employee is obtained from the personnel system (not shown). The individual basic record 24h includes data on the pattern code, employee code, date of birth, sex, company joining date, and resignation date.

The pattern code data area stores data on the identifier for identifying the pattern used in personnel expense simulation. The following data is stored for each pattern.

The employee code data area stores data on the identifier for identifying the employee.

The date of birth data area and the sex data area store data on the date of birth and sex, respectively, of the employee. The age of the employee is determined with reference to the "first day" of the calculation target month.

The company joining date data area and the resignation date data area store data for identifying the time (month and year) when the employee joins and resigns, respectively, the company.

As shown in Fig. 3D, the individual assignment information storage section 23j stores individual assignment records 24j of assignments (attributes) of employees. An individual assignment record 24j is recorded when individual information of an employee is obtained from the personnel system (not shown). The individual assignment record 24j includes data on the pattern code, employee code, division code, assignment history issue date, assignment history end date, concurrent duty classification, and allocation proportion.

The pattern code data area stores data on the identifier for identifying the pattern used in personnel expense simulation. The following data is stored for each pattern.

The employee code data area stores data on the identifier for identifying the employee.

The division code data area stores data on the identifier for identifying the organization to which the employee belongs.

The assignment history issue date data area and the assignment history end date data area store the data for identifying the time (month and year) when the employee is assigned into and out of, respectively, the organization.

The concurrent duty classification data area stores data for identifying the work state of the employee in the organization. Specifically, a flag indicating main duty organization or additional duty organization is set.

The allocation proportion data area stores data on the proportion of work load of the employee for the organization. For each employee who concurrently works for a plurality of divisions, the proportions are set such that the sum of the values of the main duty division and additional duty division is "1."

As shown in Fig. 3E, the individual job position information storage section 23k stores individual job position records 24k of the job positions (attributes) of employees. An individual job position record 24k is recorded when individual information of an employee is obtained from the personnel system (not shown). The individual job position record 24k includes data on the pattern code, employee code, division code, job position history issue date, job position history end date, and job position code.

The pattern code data area stores data on the identifier for identifying the pattern used in personnel expense simulation. The following data is stored for each pattern.

The employee code data area stores data on the identifier for identifying the employee.

The division code data area stores data on the identifier for identifying the organization to which the employee belongs.

The job position history issue date data area and the job position history end date data area store data for identifying the time (month and year) when the job position is issued or terminated, respectively, for the employee.

The job position code data area stores data on the identifier for identifying the job position.

As shown in Fig. 3F, the individual employment information storage section 23m stores individual employment records 24m of the employment statuses (attributes) of employees. An individual employment record 24m is recorded when individual information of an employee is obtained from the personnel system (not shown). The individual employment record 24m includes data on the pattern code, employee code, employment contract start date, employment contract end date, and employment classification code.

The pattern code data area stores data on the identifier for identifying the pattern used in personnel expense simulation. The following data is stored for each pattern.

The employee code data area stores data on the identifier for identifying the employee.

The employment contract start date data area and the employment contract end date data area store data on the start date and end date, respectively, of the employment contract of the employee.

The employment classification code data area stores data on the identifier for identifying the employment status of the employee.

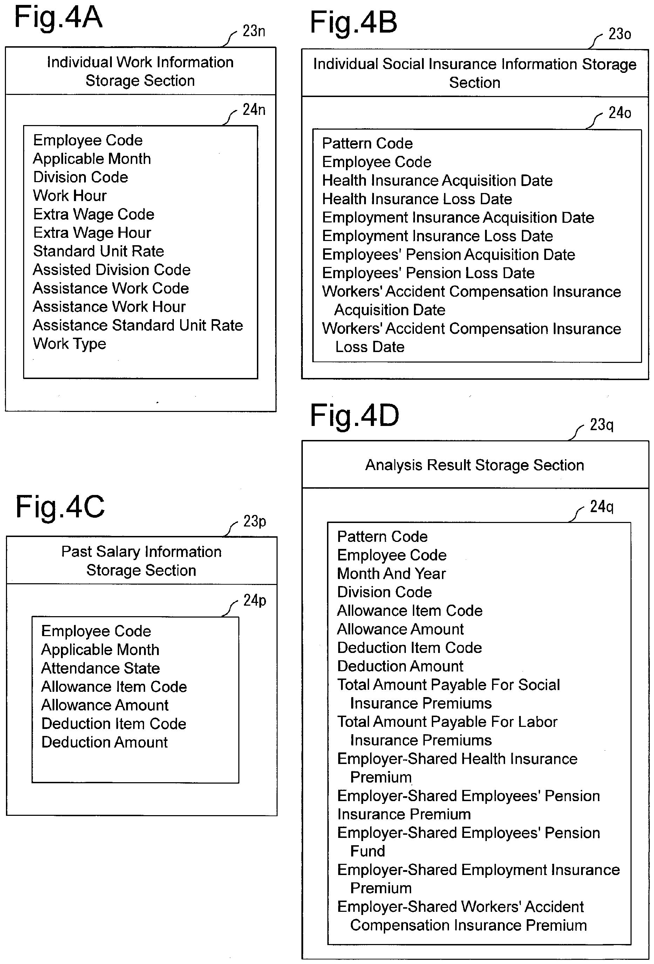

As shown in Fig. 4A, the individual work information storage section 23n stores individual work records 24n of work states of employees. An individual work record 24n is recorded when individual information of an employee is obtained from the personnel system (not shown). The individual work record 24n includes data on the employee code, applicable month, division code, work hour, extra wage code, extra wage hour, standard unit rate, assisted division code, assistance work code, assistance work hour, assistance standard unit rate, and work type.

The employee code data area stores data on the identifier for identifying the employee.

The applicable month data area stores data on the time when the work state takes place.

The division code data area stores data on the identifier for identifying the division to which the employee belongs.

The work hour data area stores data on the work hours in the division.

The extra wage code data area stores data on the identifier for identifying the contents of extra wage.

The extra wage hour data area stores data on the work hours for which an extra amount is paid.

The standard unit rate data area stores data on the hourly rate for the regular work hours.

The assisted division code data area stores data on the identifier for identifying the division that receives assistance from the employee.

The assistance work code data area stores data on the identifier for identifying the work conducted in the assistance.

The assistance work hour data area stores data on the identifier for identifying the hours of assistance.

An assistance standard unit rate data area stores data on the identifier for identifying the unit rate for the assistance.

A work type data area stores data on the identifier for identifying the work pattern of the assistance.

As shown in Fig. 4B, the individual social insurance information storage section 23o stores individual social insurance records 24o of the social insurances of employees. An individual social insurance record 24o is recorded when information on the social insurance of an employee is registered. The individual social insurance record 24o includes data on the pattern code, employee code, health insurance acquisition date, health insurance loss date, employment insurance acquisition date, employment insurance loss date, employees' pension acquisition date, employees' pension loss date, workers' accident compensation insurance acquisition date, and workers' accident compensation insurance loss date.

The pattern code data area stores data on the identifier for identifying the pattern used in personnel expense simulation. The following data is stored for each pattern.

The employee code data area stores data on the identifier for identifying the employee.

The health insurance acquisition date data area and the health insurance loss date data area store data on the acquisition date (employment contract start date) and loss date (employment contract end date), respectively, of health insurance.

The employment insurance acquisition date data area and the employment insurance loss date data area store data on the acquisition date (employment contract start date) and loss date (employment contract end date), respectively, of employment insurance.

The employees' pension acquisition date data area and the employees' pension loss date data area store data on the acquisition date (employment contract start date) and loss date (employment contract end date), respectively, of employees' pension.

The workers' accident compensation insurance acquisition date data area and the workers' accident compensation insurance loss date data area store data on the acquisition date (employment contract start date) and loss date (employment contract end date), respectively, of workers' accident compensation insurance.

As shown in Fig. 4C, the past salary information storage section 23p stores past salary records 24p of attributes of employees. A past salary record 24p is recorded when past salary data (data on past salary details of an individual (salary and bonus)) is obtained from the salary system (not shown). The present embodiment records past salary data from April to March in the previous fiscal year, for example. The past salary record 24p includes data on the employee code, applicable month, attendance state, allowance item code, allowance amount, deduction item code, and deduction amount.

The employee code data area stores data on the identifier for identifying the employee.

The applicable month data area stores data on the months and years in which the employee has received salaries.

The attendance state data area stores data on the attendance state of the employee. The attendance states include the number of days of attendances, working hours, number of leave days, and late arrival/early leaving time.

The allowance item code data area stores data on the identifier for identifying the item of the paid salary.

The allowance amount data area stores data on the amount paid in the allowance item.

The deduction item code data area stores data on the identifier for identifying the item deducted in the salary.

The deduction amount data area stores data on the amount deducted in the deduction item.

As shown in Fig. 4D, the analysis result storage section 23q stores analysis result records 24q of attributes of employees. An analysis result record 24q is recorded when a personnel expense simulation is performed. The analysis result record 24q includes data on the pattern code, employee code, month and year, division code, and associated information on paid allowance, deduction information, and information on employer share of insurance premiums. The allowance information includes data on the allowance item code and allowance amount. The deduction information includes data on the deduction item code and deduction amount. The employer share information includes data on the total amount payable for social insurance premiums, total amount payable for labor insurance premiums, employer-shared health insurance premium, employer-shared employees' pension insurance premium, employer-shared employees' pension fund, employer-shared employment insurance premium, and employer-shared workers' accident compensation insurance premium.

The pattern code data area stores data on the identifier for identifying the pattern used in personnel expense simulation. The following data is stored for each pattern.

The employee code data area stores data on the identifier for identifying the employee.

The month and year data area stores data on the months and years in the calculation time period.

The division code data area stores data on the identifier for identifying the division to which the employee belongs.

The allowance item code data area stores data on the identifier for identifying the item of paid salary.

The allowance amount data area stores data on the amount paid in the allowance item.

The deduction item code data area stores data on the identifier for identifying the item deducted in the salary.

The deduction amount data area stores data on the amount deducted in the deduction item.

The data area of total amount payable for social insurance premiums and the data area of total amount payable for labor insurance premiums store data on the total amounts payable for social insurance premiums and labor insurance premiums, respectively.

The employer-shared health insurance premium data area, the employer-shared employees' pension insurance premium data area, and the employer-shared employees' pension fund data area store data on the health insurance premium, employees' pension insurance premium, and employees' pension fund, respectively, that are paid by the employer.

The employer-shared employment insurance premium data area and the employer-shared workers' accident compensation insurance premium data area store data on the employment insurance premium and workers' accident compensation insurance premium, respectively, that are paid by the employer.

Fig. 1 shows a memory 25, which stores information on the organizations and employees for personnel expense simulation. The memory 25 also stores organizational change information, personnel transfer information, and personnel increase and decrease information. Such information is recorded when the information is entered into the personnel expense analysis apparatus 20 through the input section 11.

The organizational change information includes information on establishment, abolishment, shift, and the like of divisions. The organizational change information includes information on the same items as the organization master record 24e.

The personnel transfer information includes information on personnel transfer between divisions, and the personnel increase and decrease information includes information on new hiring and resignation. The personnel transfer information and personnel increase and decrease information includes information on the same items as the individual basic record 24h to individual employment record 24m.

A method for simulating personnel expenses with the system described above will now be described.

First, before simulating personnel expenses, visualization of past personnel expenses is performed. This visualization allows the personnel expenses from past to present to be visually checked to obtain sources for determining future simulation conditions.

### Visualization

The control section 21 of the personnel expense analysis apparatus 20 performs the specification process of output time period (step S0-1). Specifically, the management section 211 of the control section 21 outputs the time period setting screen on the output section 10. The time period setting screen includes the entry fields for setting the start and end of the past time period to be output.

Then, the control section 21 of the personnel expense analysis apparatus 20 performs the specification process of time period section (step S0-2). Specifically, the management section 211 of the control section 21 outputs the time unit setting screen on the output section 10. The time unit setting screen includes the entry fields for setting the time section (month, quarter, half, fiscal year) for compilation.

The control section 21 of the personnel expense analysis apparatus 20 then performs the specification process of output type (step S0-3). Specifically, the management section 211 of the control section 21 outputs the output type setting screen on the output section 10. In the output type setting screen, the output type that determines the output key item is specified. In the present embodiment, the selectable output types include "By organization," "By employment," "By job position," "By age," "By sex," and "By service years."

The control section 21 of the personnel expense analysis apparatus 20 performs the specification process of output format (step S0-4). Specifically, the management section 211 of the control section 21 outputs the output format setting screen on the output section 10. In the present embodiment, the selectable output formats include graphic representation and cross tabulation.

Then, the control section 21 of the personnel expense analysis apparatus 20 obtains information (step S0-5). In this process, information pieces stored in various storage sections are obtained and integrated. Specifically, the management section 211 of the control section 21 obtains, from the individual basic information storage section 23h, the individual basic records 24h of which the period between the company joining date and the resignation date overlaps with the output time period specified in the time period setting screen. Further, from the individual assignment information storage section 23j, the management section 211 obtains the individual assignment records 24j of which the period between the assignment history issue date and the assignment history end date overlaps with the output time period. From the individual job position information storage section 23k, the management section 211 obtains the individual job position records 24k of which the period between the job position history issue date and the job position history end date overlaps with the output time period. From the individual employment information storage section 23m, the management section 211 obtains the individual employment records 24m of which the period between the employment contract start date and the employment contract end date overlaps with the output time period. The management section 211 then places the individual information including the employee code, date of birth, employment classification code, concurrent duty classification, allocation proportion, employment contract start date, employment contract end date, division code, assignment history issue date, assignment history end date, job position code, job position issue date, job position end date, and resignation date into the memory 25. From the individual work information storage section 23n, the management section 211 obtains the individual work record 24n of each of the extracted employees and places the records into the memory 25. From the individual social insurance information storage section 23o, the management section 211 obtains the individual social insurance record 24o of each of the extracted employees and places the records into the memory 25. From the past salary information storage section 23p, the management section 211 obtains the past salary record 24p of each of the extracted employees and places the records into the memory 25. The management section 211 also obtains, from the organization master storage section 23e, the organization master records 24e of which the period between the implementation start date and the implementation end date overlaps with the output time period. The management section 211 places the organization structure list information including the implementation start date, implementation end date, division code, and hierarchy into the memory 25. The information pieces stored in the memory 25 are thus associated with one another by the employment and division codes.

The control section 21 of the personnel expense analysis apparatus 20 performs compilation (step S0-6). Specifically, the management section 211 of the control section 21 compiles the personnel expenses stored in the past salary records 24p according to the output type key and time period section. First, the output time period is divided into time sections in this process. For example, personnel expenses are compiled by output type as follows.

When "by organization" is set, the employees who belong to each organization in the time period are identified, and the personnel expenses are compiled by organization.

When "by employment" is set, the employees who belong to each employment pattern in the time period are identified, and the personnel expenses are compiled by employment pattern.

When "by job position" is set, the employees who belong to each job position in the time period are identified, and the personnel expenses are compiled by job position.

When "by age" is set, the employees who belong to each age range (teens, twenties,...) in the time period are identified, and the personnel expenses are compiled by age range.

When "by sex" is set, the employees in the time period are identified by sex, and the personnel expenses are compiled by sex.

When "by service years" is set, the employees who belong to each service year range are identified, and the personnel expenses are compiled by service year range.

In this compilation, personnel expenses are compiled by attribute such that drill down/drill up can be displayed according to attributes of employees (e.g., assignment division).

Then, the control section 21 of the personnel expense analysis apparatus 20 performs the output process (step S0-7). Specifically, the management section 211 of the control section 21 outputs the results on the output section 10 in the output format specified in the output format setting screen (graphic representation or cross tabulation). For graphic representation, the management section 211 outputs a bar chart indicating the personnel expenses according to the time period and output type key. For cross tabulation, the management section 211 outputs a table in which output type key items can be drilled up and down. Further, a screen for selecting items other than the key items is displayed. This allows for filtering according to the conditions specified in the selection screen.

### Personnel Expenses Simulation

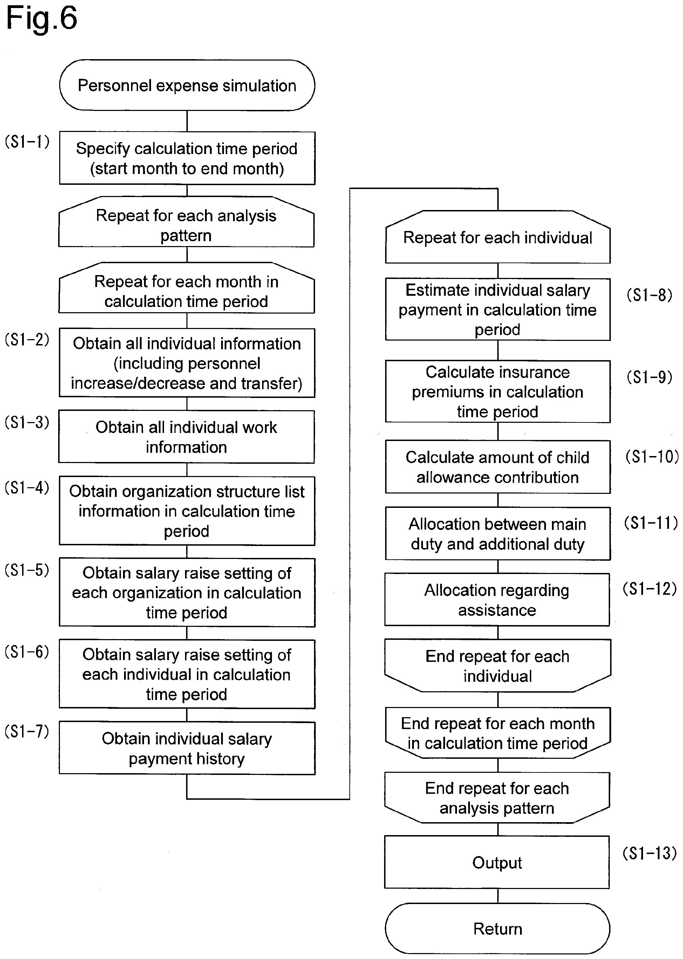

Referring to Fig. 6, personnel expenses simulation will now be described.

First, the control section 21 of the personnel expense analysis apparatus 20 performs the specification process of calculation time period (start month to end month) (step S1-1). Specifically, the management section 211 of the control section 21 outputs the time period setting screen on the output section 10. The time period screen includes the entry fields of the start and end months of the calculation time period. The management section 211 obtains data on the start and end months entered in the time period setting screen and temporarily places the data in the memory 25.

The control section 21 of the personnel expense analysis apparatus 20 then successively identifies the pattern codes to which a flag indicating calculation completion is not set in the analysis pattern information storage section 23a. The control section 21 repeats the following processes using various information associated with each pattern code.

The control section 21 of the personnel expense analysis apparatus 20 successively identifies each month in the calculation time period as a process target month and repeats the following processes. The control section 21 checks the employment contract end dates and resignation dates stored in the memory 25 and removes, from the memory 25, the individual information of which the employment contract end date or resignation date is prior to the process target month. In addition, the control section 21 checks the assignment history end dates and job position end dates stored in the memory 25 and removes, from the memory 25, the individual information of which the assignment history end date or job position end date is prior to the process target month. The control section 21 then re-obtains the information on the assignment and job position of the employee in the process target month from the individual assignment information storage section 23j and the individual job position information storage section 23k.

Then, the control section 21 of the personnel expense analysis apparatus 20 obtains all individual information (step S1-2). Specifically, the management section 211 of the control section 21 obtains, from the individual basic information storage section 23h, the individual basic records 24h of which the period between the company joining date and the resignation date overlaps with the calculation time period. Further, from the individual assignment information storage section 23j, the management section 211 obtains the individual assignment records 24j of which the period between the assignment history issue date and the assignment history end date overlaps with the calculation time period. From the individual job position information storage section 23k, the management section 211 obtains the individual job position records 24k of which the period between the job position history issue date and the job position history end date overlaps with the calculation time period. From the individual employment information storage section 23m, the management section 211 obtains the individual employment records 24m of which the period between the employment contract start date and the employment contract end date overlaps with the calculation time period. The management section 211 then places the individual information including the employee code, date of birth, employment classification code, concurrent duty classification, allocation proportion, employment contract start date, employment contract end date, division code, assignment history issue date, assignment history end date, job position code, job position issue date, job position end date, and resignation date into the memory 25. From the individual work information storage section 23n, the management section 211 further obtains the individual work record 24n of each of the extracted employees and places the records into the memory 25. From the individual social insurance information storage section 23o, the management section 211 obtains the individual social insurance record 24o of each of the extracted employees and places the records into the memory 25. Further, the management section 211 corrects the individual information using the personnel transfer information and personnel increase and decrease information in the calculation time period stored in the memory 25.

The control section 21 of the personnel expense analysis apparatus 20 then obtains individual work information (step S1-3). Specifically, the management section 211 of the control section 21 obtains, from the individual work information storage section 23n, the individual work records 24n that include the employee codes of the employees obtained in step S1-2 and places the records into the memory 25.

Then, the control section 21 of the personnel expense analysis apparatus 20 obtains the organization structure list information in the calculation time period (step S1-4). Specifically, the management section 211 of the control section 21 obtains, from the organization master storage section 23e, the organization master records 24e of which the period between the implementation start date and the implementation end date overlaps with the calculation time period. The management section 211 places the organization structure list information including the implementation start date, implementation end date, division code, and hierarchy into the memory 25. Further, the management section 211 corrects the organization structure list information using the organizational change information in the calculation time period stored in the memory 25.

The control section 21 of the personnel expense analysis apparatus 20 then obtains the salary raise setting of each organization in the calculation time period (step S1-5). Specifically, the management section 211 of the control section 21 obtains, from the salary raise setting-organization information storage section 23f, the salary raise setting-organization records 24f of which the salary raise month overlaps with the calculation time period and places the salary raise setting-organization information into the memory 25.

The control section 21 of the personnel expense analysis apparatus 20 then obtains an individual salary raise setting in the calculation time period (step S1-6). Specifically, the management section 211 of the control section 21 obtains, from the salary raise setting-individual information storage section 23g, the salary raise setting-individual records 24g of which the salary raise month overlaps with the calculation time period and places the salary raise setting-individual information into the memory 25.

The control section 21 of the personnel expense analysis apparatus 20 then obtains individual salary payment history (step S1-7). Specifically, the management section 211 of the control section 21 obtains, from the past salary information storage section 23p, the past salary records 24p that include the employee codes of the employees obtained in step S1-2.

The control section 21 of the personnel expense analysis apparatus 20 repeats the processes below for each individual.

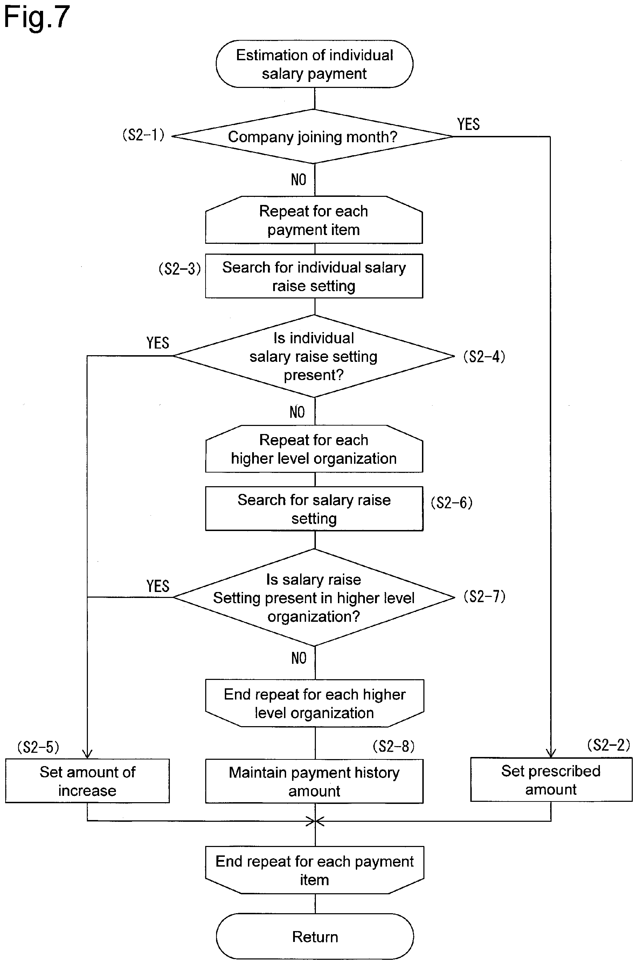

First, the control section 21 of the personnel expense analysis apparatus 20 estimates individual salary payment in the calculation time period (step S1-8). In this process, when "individual" salary raise setting information of the process target month is set for a payment item, the salary raise setting information is used for the payment item. The salary raise setting applies to the period between the simulation start month or the month following the same month of the previous year and the calculation target month. When there are multiple salary raise settings (e.g., in April and October), the values are cumulated. For a payment item for which a salary raise setting is not set, the presence or absence of salary raise setting in upper level divisions are checked in sequence. If a salary raise setting is set in an upper level division, the salary raise setting is used. A payment item to which a salary raise setting is not set is not increased. The amount of each payment item after raise is calculated based on the payment before raise of each individual and the salary raise setting of the payment item. In addition, the amount of increase in the payment is calculated. However, if the calculation target month is the company joining month, the salary raise setting of the organization does not apply. This is described below in further details referring to Fig. 7.

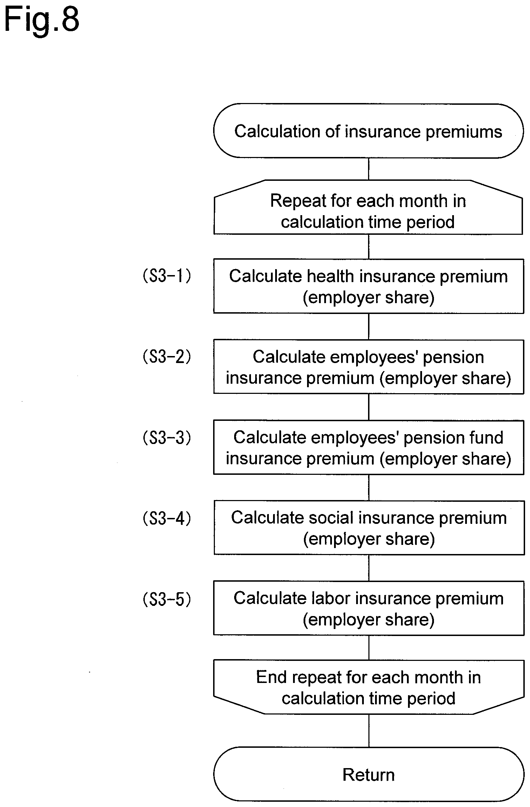

Then, the control section 21 of the personnel expense analysis apparatus 20 calculates the insurance premiums in the calculation time period (step S1-9). In this process, the individual social insurance premium (employer share) and the amount to be paid by the employer for items other than social insurance premium are calculated for each employee whose period between the insurance acquisition date and the loss date stored in the individual social insurance information storage section 23o overlaps with the process target month. This will be described below in further details referring to Fig. 8.

Then, the control section 21 of the personnel expense analysis apparatus 20 calculates the amount of child allowance contribution (step S1-10). Specifically, the share estimation section 213 of the control section 21 obtains the child allowance contribution rate from the parameter master storage section 23c. The share estimation section 213 calculates the child allowance contribution amount by multiplying the payment calculated in step S1-8 by the child allowance contribution rate.

The control section 21 of the personnel expense analysis apparatus 20 then performs the allocation process between main duty and additional duty (step S1-11). Specifically, the share estimation section 213 of the control section 21 identifies the concurrent duty allocation proportion in the individual information obtained from the individual assignment information storage section 23j and stored in the memory 25. Based on the concurrent duty category and allocation proportion, the share estimation section 213 allocates the allowance amounts to the main duty division and additional duty division. The share estimation section 213 registers the allocated allowance amounts in the analysis result records 24q in which the division codes of the main duty division and additional duty division are registered in the analysis result storage section 23q.

The control section 21 of the personnel expense analysis apparatus 20 then performs the allocation process regarding assistance (step S1-12). Specifically, the share estimation section 213 of the control section 21 allocates allowances to the assisting division and assisted division in the individual work record 24n stored in the memory 25. In this process, the share estimation section 213 calculates the allowance amount regarding assistance based on the assistance work hours and assistance standard unit rate obtained from the individual work information storage section 23n and stored in the memory 25. The share estimation section 213 allocates the allowance amount from the assisting division (assignment division) to the assisted division identified by the assisted division code in the individual work record 24n. Then, the share estimation section 213 registers the allocated allowance amount in the analysis result records 24q in which the division codes of the assisting division and the assisted division are registered in the analysis result storage section 23q.

The processes described above are repeated for all individuals recorded in the memory 25.

Further, the processes are repeated for all months in the calculation time period.

The control section 21 of the personnel expense analysis apparatus 20 sets a flag indicating calculation completion to the pattern code that has been calculated in the analysis pattern information storage section 23a. The processes are repeated for all analysis patterns.

Then, the control section 21 of the personnel expense analysis apparatus 20 performs the output process (step S1-13). Specifically, the management section 211 of the control section 21 outputs simulation results using the analysis pattern information storage section 23a, parameter master storage section 23c, payment item master storage section 23d, organization master storage section 23e, past salary information storage section 23p, and analysis result storage section 23q. The management section 211 outputs the output setting screen on the output section 10. The output setting screen includes the entry fields of analysis pattern, start and end dates of output time period, and output target organization.

The management section 211 obtains data on the analysis pattern, output time period, and output target organization (division code) entered in the output setting screen and temporarily places the data into the memory 25. According to the output time period, the management section 211 obtains the data before the personnel expense simulation from the past salary information storage section 23p and obtains other data from the analysis result storage section 23q. In this process, the management section 211 obtains the data of each item associated with the division code of the output target organization. The management section 211 processes the obtained data of each item into a format usable with general spreadsheet software and outputs the data on the output section 10. The output items include the process month, division code, employee code, job position code, salary type, allowance amount, employer-shared health insurance premium, employer-shared employees' pension insurance premium, employer-shared employees' pension fund, employer-shared employment insurance premium, employer-shared workers' accident compensation insurance premium, total amount of employer share of employees' pension, total amount of employer share of social insurance, child allowance contribution, date of birth, sex, and the like. Using general software, the costs of the items are added according to the desired output type in the same manner as step S0-6 to compile the personnel expenses.

### Estimation of Individual Salary Payment

Referring to Fig. 7, estimation of individual salary payment will now be described.

First, the control section 21 of the personnel expense analysis apparatus 20 determines whether the process target month is the company joining month (step S2-1). Specifically, the salary estimation section 212 of the control section 21 compares the process target month with the company joining date in individual information in the memory 25. If the month of the company joining date is identical with the process target month, the process target month is determined to be the company joining month.

If the process target month is determined to be the company joining month ("YES" in step S2-1), the control section 21 of the personnel expense analysis apparatus 20 sets the prescribed amount (step S2-2). Specifically, the salary estimation section 212 of the control section 21 registers the prescribed amount, which is preset, in the analysis result record 24q in the analysis result storage section 23q and ends the calculation for this employee.

If the process target month is determined not to be the company joining month ("NO" in step S2-1), the control section 21 of the personnel expense analysis apparatus 20 repeats the following process for each payment item.

In this process, the control section 21 of the personnel expense analysis apparatus 20 searches for individual salary raise setting (step S2-3). Specifically, the salary estimation section 212 of the control section 21 searches the memory 25 for the salary raise setting-individual record 24g of which the salary raise month is the process target month.

The control section 21 of the personnel expense analysis apparatus 20 then determines whether an individual salary raise setting is present (step S2-4). Specifically, the salary estimation section 212 of the control section 21 determines that an individual salary raise setting is present if the salary raise setting-individual record 24g is retrieved from the memory 25.

If an individual salary raise setting is determined to be present ("YES" in step S2-4), the control section 21 of the personnel expense analysis apparatus 20 sets the amount of increase (step S2-5). Specifically, the salary estimation section 212 of the control section 21 calculates the amount of increase based on the salary raise contents stored in the salary raise setting-individual record 24g. For example, the salary estimation section 212 obtains information such as the work location, qualification, job title, and personnel evaluation of the employee from the personnel system (not shown). Based on the obtained information, the salary estimation section 212 determines the salary raise contents using a formula.

If an individual salary raise setting is determined to be absent ("NO" in step S2-4), the control section 21 of the personnel expense analysis apparatus 20 repeats the following process for each higher level organization in sequence starting from the lower level to which the individual belongs in the organization structure list information.

The control section 21 of the personnel expense analysis apparatus 20 searches for a salary raise setting (step S2-6). Specifically, the salary estimation section 212 of the control section 21 searches the memory 25 for the salary raise setting-organization information of which the salary raise month is the process target month.

Then, the control section 21 of the personnel expense analysis apparatus 20 determines whether a salary raise setting for a higher level organization is present (step S2-7). Specifically, the salary estimation section 212 of the control section 21 determines that a salary raise setting for a higher level organization is present if salary raise setting-organization information is retrieved from the memory 25.

If a salary raise setting for a higher level organization is determined to be present ("YES" in step S2-7), the control section 21 of the personnel expense analysis apparatus 20 sets the amount of increase (step S2-5). Specifically, the salary estimation section 212 of the control section 21 calculates the amount of increase based on the salary raise contents stored in the salary raise setting-organization information. Then, the salary estimation section 212 records the amount obtained by adding the amount of increase to the allowance amount in the analysis result record 24q of the previous month as the analysis result record 24q of the calculation target month.

If a salary raise setting for a higher level organization is determined to be absent ("NO" in step S2-7), the control section 21 of the personnel expense analysis apparatus 20 repeats the search process for salary raise setting (step S2-6) and the subsequent processes for each higher level organization.

If there is no salary raise setting for any of the upper level organizations, the control section 21 of the personnel expense analysis apparatus 20 maintains the payment history amount (step S2-8). Specifically, the salary estimation section 212 of the control section 21 records the allowance amount in the analysis result record 24q of the previous month as the analysis result record 24q of the calculation target month.

The processes are repeated for all payment items.

### Calculation of Insurance Premiums

Referring to Fig. 8, calculation of insurance premiums will now be described. In this process, for each employee whose period between the insurance acquisition and loss dates stored in the individual social insurance information storage section 23o overlaps with the calculation time period, each month is identified successively as a process target month, and the following processes are repeated for each month.

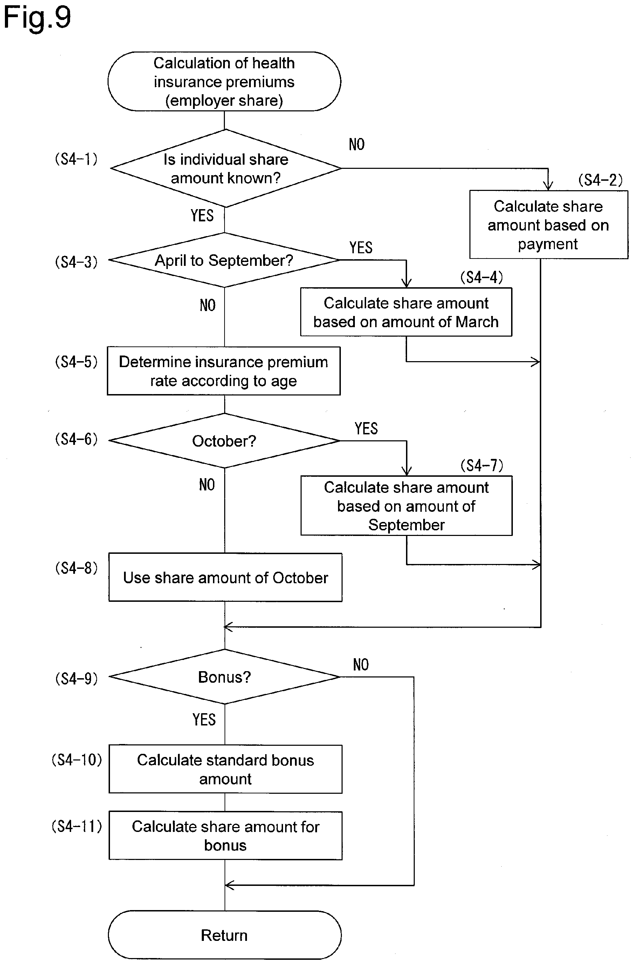

First, the control section 21 of the personnel expense analysis apparatus 20 calculates the health insurance premium (employer share) (step S3-1). In this process, approximate calculation is performed using the individual share amount. For salary, the insurance premium corresponding to the amount of salary raise is calculated by multiplying the amount of salary raise from the previous payment by the health insurance premium rate, and the calculated amount is added to the insurance premium of the previous month. For a bonus, the insurance premium is calculated by multiplying the amount of the bonus by the health insurance premium rate. Depending on the age of the employee, the health insurance rate (with nursing care insurance) or the health insurance rate (without nursing care insurance) applies. This will be described below in further details referring to Fig. 9.

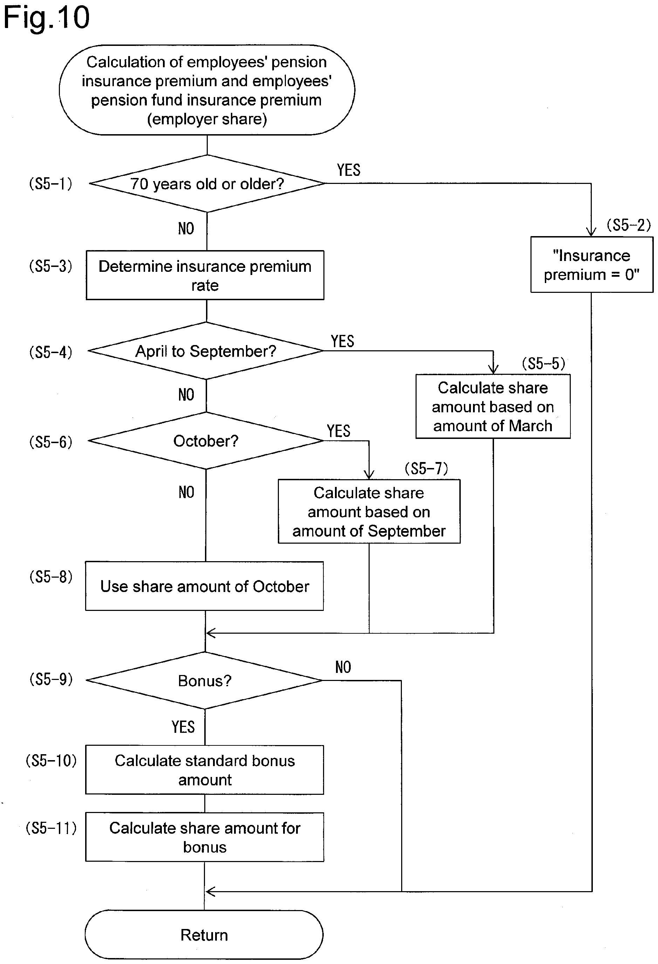

Next, the control section 21 of the personnel expense analysis apparatus 20 calculates the employees' pension insurance premium (employer share) (step S3-2). In this process, approximate calculation is again performed using the individual share amount. For salary, the insurance premium corresponding to the amount of salary raise is calculated by multiplying the amount of salary raise from the previous payment by the employees' pension insurance premium rate, and the calculated amount is added to the insurance premium of the previous month. For a bonus, the insurance premium is calculated by multiplying the amount of the bonus by the employees' pension insurance premium rate. The applicable employees' pension insurance premium rates vary depending on the age of the employee. This will be described below in further details referring to Fig. 10.

The control section 21 of the personnel expense analysis apparatus 20 then calculates the employees' pension fund insurance premium (employer share) (step S3-3). The employees' pension fund insurance premium is calculated in the same manner as the employees' pension insurance premium. This will be described below in further details referring to Fig. 10.

The control section 21 of the personnel expense analysis apparatus 20 then calculates the social insurance premium (employer share) (step S3-4). Specifically, the share estimation section 213 of the control section 21 calculates the total amount payable for social insurance premiums, which is the sum of the health insurance premium (employer share), employees' pension insurance premium (employer share), and employees' pension fund insurance premium (employer share) that are calculated in steps S3-1 to S3-3. Then, the share estimation section 213 registers the total amount payable for social insurance premiums in the analysis result record 24q of the corresponding pattern code, employee code, and calculation target month in the analysis result storage section 23q.

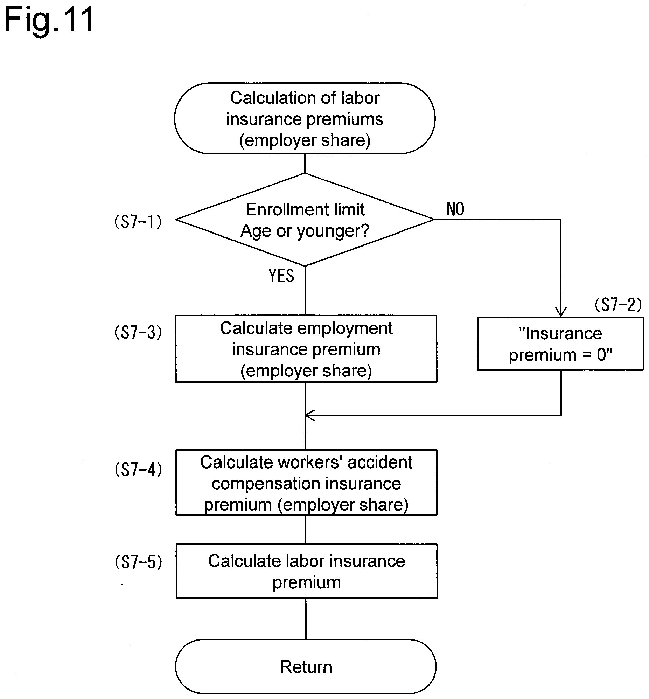

Then, the control section 21 of the personnel expense analysis apparatus 20 calculates the labor insurance premium (employer share) (step S3-5). In this process, the control section 21 calculates the labor insurance premium (employer share) by adding the employment insurance premium (employer share) to the workers' accident compensation insurance premium (employer share). The employment insurance premium (employer share) is calculated by multiplying the payment by the employment insurance premium rate. The workers' accident compensation insurance premium (employer share) is calculated by multiplying the payment by the workers' accident compensation insurance premium rate (employer share). This will be described below in further details referring to Fig. 11.

The processes are repeated for all months in the calculation time period.

### Calculation of Health Insurance Premiums (Employer Share)

Referring to Fig. 9, the calculation process of health insurance premium (employer share) will now be described.

First, the control section 21 of the personnel expense analysis apparatus 20 determines whether the individual share amount is known (step S4-1). Specifically, the share estimation section 213 of the control section 21 checks whether the individual share amount of health insurance premium is recorded in the deduction amount in the past salary record 24p of March in the past salary information storage section 23p. If the health insurance premium share amount is recorded, the individual share amount is determined to be known.

If the individual share amount is determined to be unknown ("NO" in step S4-1), the control section 21 of the personnel expense analysis apparatus 20 calculates the share amount based on the payment (step S4-2). Specifically, the share estimation section 213 of the control section 21 obtains, from the analysis result storage section 23q, the payment of the individual in the calculation target month. Then, the share estimation section 213 obtains the health insurance premium rate from the company setting master storage section 23b and calculates the share amount by multiplying the payment by the health insurance premium rate. Then, the share estimation section 213 registers the share amount in the analysis result record 24q of the corresponding pattern code, employee code, and month and year in the analysis result storage section 23q.

If it is determined that the individual share amount is known ("YES" in step S4-1), the control section 21 of the personnel expense analysis apparatus 20 determines whether the calculation target month is April to September (step S4-3).

If the calculation target month is April to September ("YES" in step S4-3), the control section 21 of the personnel expense analysis apparatus 20 obtains the share amount based on the amount of March (step S4-4). In this embodiment, an individual and the company are assumed to share the premiums equally. Thus, the individual share amount is used as the employer share amount. Specifically, the share estimation section 213 of the control section 21 searches the analysis result storage section 23q for the past salary record 24p of March of the same year. If the past salary record 24p of March of the same year is obtained, the actual amount (health insurance (individual share)) in the past salary record 24p is obtained as the amount of March. If the share estimation section 213 fails to obtain the actual amount (health insurance (individual share)) in the past salary record 24p of March of the same year, the share estimation section 213 obtains, as the amount of March, the health insurance share amount in the analysis result record 24q of March of the same year stored in the analysis result storage section 23q. Then, the share estimation section 213 registers the amount of March as the share amount in the analysis result record 24q of the corresponding pattern code, employee code, and calculation target month (April to September) in the analysis result storage section 23q.

If the calculation target month is not April to September, ("NO" in step S4-3), the control section 21 of the personnel expense analysis apparatus 20 determines the insurance premium rate according to the age (step S4-5). Specifically, the share estimation section 213 of the control section 21 obtains the date of birth from the individual basic information storage section 23h and calculates the age of the employee in the process target month. Then, the share estimation section 213 compares the calculated age with the "nursing care insurance age-lower limit," "nursing care insurance age-upper limit," and "latter-stage elderly age" stored in the parameter master storage section 23c. If the age is less than the "nursing care insurance age-lower limit," the "health insurance rate (without nursing care insurance)" is used. If the age is between "nursing care insurance age-lower limit" and "nursing care insurance age-upper limit," the "health insurance rate (with nursing care insurance)" is used. If the age is "nursing care insurance age-upper limit" or over and less than the "latter-stage elderly age," "health insurance rate (without nursing care insurance)" is used. If the age is the "latter-stage elderly age" or over, "0" is used. Then, the share estimation section 213 identifies, depending on whether the nursing care insurance premium is added, one of "health insurance rate (without nursing care insurance)" and "health insurance rate (with nursing care insurance)" from the company setting master storage section 23b according to age.

Then, the control section 21 of the personnel expense analysis apparatus 20 determines whether the calculation target month is October (step S4-6).

If the calculation target month is October ("YES" in step S4-6), the control section 21 of the personnel expense analysis apparatus 20 obtains the share amount based on the amount of September (step S4-7). Specifically, the share estimation section 213 of the control section 21 searches the analysis result storage section 23q for the past salary record 24p of September of the same year. If the past salary record 24p of September of the same year is obtained, the actual amount (health insurance (individual share)) in the past salary record 24p is obtained as the amount of September. If the share estimation section 213 fails to obtain the actual amount (health insurance (individual share)) in the past salary record 24p of September of the same year, the share estimation section 213 obtains the health insurance share amount in the analysis result record 24q of September of the same year stored in the analysis result storage section 23q as the share amount of September. The share estimation section 213 then calculates the amount of increase from the amount of September. Regardless of the allowance item, all the amounts increased in the salary raise setting are used as the amounts of increase. Then, the share estimation section 213 multiplies the calculated amount of increase by the insurance premium rate (employer) and adds the result to the amount of September to obtain the employer share amount. Further, the share estimation section 213 calculates the maximum amount by multiplying the standard monthly remuneration maximum amount (health insurance) stored in the parameter master storage section 23c by the insurance premium rate (employer). The maximum amount thus obtained is used when the employer share amount is greater than or equal to the maximum amount. Then, the share estimation section 213 registers the share amount in the analysis result record 24q of the corresponding pattern code, employee code, and calculation target month (October) in the analysis result storage section 23q.

If the calculation target month is not October ("NO" in step S4-6), the calculation target month is November to March. In this case, the control section 21 of the personnel expense analysis apparatus 20 uses the share amount of October as the share amounts of November to March (step S4-8). Specifically, the share estimation section 213 of the control section 21 registers the share amount of October in the analysis result record 24q of the corresponding pattern code, employee code, and calculation target month (November to March) in the analysis result storage section 23q.

The control section 21 of the personnel expense analysis apparatus 20 then determines whether there is a bonus (step S4-9). Specifically, the share estimation section 213 of the control section 21 checks whether a bonus is recorded in the analysis result record 24q in the analysis result storage section 23q.

If it is determined that there is a bonus ("YES" in step S4-9), the control section 21 of the personnel expense analysis apparatus 20 calculates the standard bonus amount (step S4-10). Specifically, the share estimation section 213 of the control section 21 calculates the standard bonus amount as follows.
(a) If the accumulative amount of bonuses since April of the same year (excluding the bonus of calculation target month) is greater than or equal to the "standard bonus maximum amount-health insurance" in the parameter master storage section 23c, the standard bonus amount is set as 0 yen.
(b) If the sum of the accumulative amount of bonuses since April of the same year and the bonus amount of the calculation target month is greater than or equal to the "standard bonus maximum amount-health insurance" in the parameter master storage section 23c, the standard bonus amount is set as "5.4 million yen - the accumulative amount of bonuses since April of the same year."
(c) In the case other than (a) and (b) above, the bonus amount of the calculation target month is used as the standard bonus amount.

Then, the control section 21 of the personnel expense analysis apparatus 20 calculates the share amount for the bonus (step S4-11). Specifically, the share estimation section 213 of the control section 21 calculates the insurance premium for bonus (employer) by multiplying the standard bonus amount by the insurance premium rate (employer) stored in the company setting master storage section 23b. The share estimation section 213 then registers the share amount for bonus in the analysis result record 24q of the corresponding pattern code, employee code, and calculation target month in the analysis result storage section 23q.

If it is determined that there is no bonus ("NO" in step S4-9), calculation of standard bonus amount (step S4-10) and calculation of share amount for bonus (step S4-11) are skipped, and the process ends.

Calculation of Employees' Pension Insurance Premium and Employees' Pension Fund Insurance Premium (Employer Share)
Referring to Fig. 10, the calculation process of employees' pension insurance premium (employer share) will now be described. The employees' pension fund insurance premium can be calculated in the same manner as the employees' pension insurance premium.

First, the control section 21 of the personnel expense analysis apparatus 20 determines whether the employee is 70 years old or older (step S5-1). Specifically, the share estimation section 213 of the control section 21 obtains the date of birth from the individual basic information storage section 23h and calculates the age of the employee in the process target month. The share estimation section 213 compares the calculated age with the employees' pension age (70 years old) in the parameter master storage section 23c.

If the employee is determined to be 70 years old or older ("YES" in step S5-1), the control section 21 of the personnel expense analysis apparatus 20 sets "insurance premium = 0" (step S5-2). Specifically, the share estimation section 213 of the control section 21 sets "0" as the employees' pension insurance premium.

If the employee is determined not to be 70 years old or older, ("NO" in step S5-1), the control section 21 of the personnel expense analysis apparatus 20 determines the insurance premium rate (step S5-3). Specifically, the share estimation section 213 of the control section 21 obtains the employees' pension insurance rate (salary) from the company setting master storage section 23b. The employees' pension fund insurance premium is calculated only when "Yes" is set in the "employees' pension fund enrollment" stored in the company setting master storage section 23b.

Then, the control section 21 of the personnel expense analysis apparatus 20 then determines whether the calculation target month is April to September (step S5-4).

If the calculation target month is April to September ("YES" in step S5-4), the control section 21 of the personnel expense analysis apparatus 20 obtains the share amount based on the amount of March (step S5-5). In this embodiment, an individual and the company are assumed to share the premiums equally. Thus, the employee share amount is used as the employer share amount. Specifically, the share estimation section 213 of the control section 21 searches the analysis result storage section 23q for the past salary record 24p of March of the same year. If the past salary record 24p of March of the same year is obtained, the actual amount (employees' pension insurance premium (individual share)) in the past salary record 24p is obtained as the amount of March. If the share estimation section 213 fails to obtain the actual amount (employees' pension insurance premium (individual share)) in the past salary record 24p of March of the same year, the share estimation section 213 obtains, as the amount of March, the employees' pension insurance share amount in the analysis result record 24q of March of the same year stored in the analysis result storage section 23q. Then, the share estimation section 213 registers the amount of March as the share amount in the analysis result record 24q of the corresponding pattern code, employee code, and calculation target month (April to September) in the analysis result storage section 23q.

If the calculation target month is not April to September, ("NO" in step S5-4), the control section 21 of the personnel expense analysis apparatus 20 determines whether the calculation target month is October (step S5-6).

If the calculation target month is October ("YES" in step S5-6), the control section 21 of the personnel expense analysis apparatus 20 obtains the share amount based on the amount of September (step S5-7). Specifically, the share estimation section 213 of the control section 21 searches the analysis result storage section 23q for the past salary record 24p of September of the same year. If the past salary record 24p of September of the same year is obtained, the actual amount (employees' pension insurance (individual share)) in the past salary record 24p is obtained as the amount of September. If the share estimation section 213 fails to obtain the actual amount (employees' pension insurance premium (individual share)) in the past salary record 24p of September of the same year, the share estimation section 213 obtains, as the amount of September, the employees' pension insurance share amount in the analysis result record 24q of September of the same year stored in the analysis result storage section 23q. The share estimation section 213 then calculates the amount of increase from the amount of September. Regardless of the allowance item, all the amounts increased in the salary raise setting are used as the amounts of increase. Then, the share estimation section 213 multiplies the calculated amount of increase by the insurance premium rate (employer) and adds the result to the amount of September to obtain the employer share amount. Further, the share estimation section 213 calculates the maximum amount by multiplying the standard monthly remuneration maximum amount (employees' pension insurance) stored in the parameter master storage section 23c by the insurance premium rate (employer). The maximum amount thus obtained is used when the employer share amount is greater than or equal to the maximum amount. Then, the share estimation section 213 registers the share amount in the analysis result record 24q of the corresponding pattern code, employee code, and calculation target month (October) in the analysis result storage section 23q.

If the calculation target month is not October ("NO" in step S5-6), the calculation month is November to March. In this case, the control section 21 of the personnel expense analysis apparatus 20 uses the share amount of October as the share amounts of November to March (step S5-8). Then, the control section 21 registers the share amount of October in the analysis result record 24q of the corresponding pattern code, employee code, and calculation target month (November to March) in the analysis result storage section 23q.

The control section 21 of the personnel expense analysis apparatus 20 then determines whether there is a bonus (step S5-9). Specifically, the share estimation section 213 of the control section 21 checks whether a bonus is recorded in the analysis result record 24q in the analysis result storage section 23q.

If it is determined that there is a bonus ("YES" in step S5-9), the control section 21 of the personnel expense analysis apparatus 20 calculates the standard bonus amount (step S5-10). Specifically, the share estimation section 213 of the control section 21 calculates the standard bonus amount as follows.
(a) If the accumulative amount of bonuses since April of the same year (excluding the bonus of calculation target month) is greater than or equal to the "employees' pension fund bonus maximum amount" in the parameter master storage section 23c, the standard bonus amount is set as 0 yen.
(b) If the sum of the accumulative amount of bonuses since April of the same year and the bonus amount of calculation target month is greater than or equal to the "employees' pension fund bonus maximum amount" in the parameter master storage section 23c, the standard bonus amount is set as "1.5 million yen - the accumulative amount of bonuses since April of the same year."
(c) In the case other than (a) and (b) above, the bonus amount of the calculation target month is used as the standard bonus amount.

Then, the control section 21 of the personnel expense analysis apparatus 20 calculates the share amount for the bonus (step S5-11). Specifically, the share estimation section 213 of the control section 21 calculates the insurance premium for bonus (employer) by multiplying the standard bonus amount by the insurance premium rate (employer) stored in the company setting master storage section 23b. The share estimation section 213 then registers the share amount for bonus in the analysis result record 24q of the corresponding pattern code, employee code, and calculation target month in the analysis result storage section 23q.

If it is determined that there is no bonus ("NO" in step S5-9), calculation of standard bonus amount (step S5-10) and calculation of share amount for bonus (step S5-11) are skipped, and the process ends.

### Calculation of Labor Insurance Premiums (Employer Share)

Referring to Fig. 11, the calculation process of labor insurance premium (employer share) will now be described.

First, the control section 21 of the personnel expense analysis apparatus 20 determines whether the employee is the enrollment limit age or younger (step S7-1). Specifically, the share estimation section 213 of the control section 21 obtains the date of birth from the individual basic information storage section 23h and calculates the age of the employee in the process target month. Then, the share estimation section 213 determines whether the employee is the enrollment limit age of employment insurance (64 years old) or younger.

If the employee is determined to be over the enrollment limit age ("NO" in step S7-1), the control section 21 of the personnel expense analysis apparatus 20 sets "Insurance premium = 0" (step S7-2). Specifically, the share estimation section 213 of the control section 21 registers "0" as the employment insurance premium (employer share) in the analysis result record 24q of the corresponding pattern code, employee code, and calculation target month in the analysis result storage section 23q.

If the employee is determined to be the enrollment limit age or younger ("YES" in step S7-1), the control section 21 of the personnel expense analysis apparatus 20 calculates the employment insurance premium (employer share) (step S7-3). Specifically, the share estimation section 213 of the control section 21 calculates the employment insurance premium (employer share) by multiplying the payment by the employment insurance rate stored in the company setting master storage section 23b. Then, the share estimation section 213 registers the employment insurance premium (employer share) in the analysis result record 24q of the corresponding pattern code, employee code, and calculation target month in the analysis result storage section 23q.

Then, the control section 21 of the personnel expense analysis apparatus 20 calculates the workers' accident compensation insurance premium (employer share) (step S7-4). Specifically, the share estimation section 213 of the control section 21 calculates the workers' accident compensation insurance premium (employer share) by multiplying the payment by the workers' accident compensation insurance premium rate stored in the company setting master storage section 23b. The share estimation section 213 then registers the workers' accident compensation insurance premium (employer share) in the analysis result record 24q of the corresponding pattern code, employee code, and calculation target month in the analysis result storage section 23q.

The control section 21 of the personnel expense analysis apparatus 20 then calculates the labor insurance premium (step S7-5). Specifically, the share estimation section 213 of the control section 21 obtains the total amount payable for labor insurance premiums by adding the employment insurance premium and the workers' accident compensation insurance premium obtained in steps S7-3 and S7-4, respectively. Then, the share estimation section 213 registers the total amount payable for labor insurance premiums in the analysis result record 24q of the corresponding pattern code, employee code, and calculation target month in the analysis result storage section 23q.

The present embodiment has the following advantages.
(1) The personnel expense analysis apparatus 20 of the present embodiment performs visualization and personnel expense simulation. This allows for the comprehension of the labor cost from past to present for estimating the future labor costs. Based on the labor costs from past to future, enhanced competitiveness and productivity of human resources of the company may be achieved, and the necessary labor costs of the company may be reduced.
(2) The control section 21 of the personnel expense analysis apparatus 20 of the present embodiment obtains information on all individuals (step S1-2) and the organization structure list information of the calculation time period (step S1-4). Furthermore, the control section 21 of the personnel expense analysis apparatus 20 obtains the salary raise setting of each organization in the calculation time period (step S1-5) and the salary raise setting of each individual in the calculation time period (step S1-6). The control section 21 of the personnel expense analysis apparatus 20 also estimates the individual salary payment in the calculation time period (step S1-8). This allows for estimation of future salaries. The control section 21 of the personnel expense analysis apparatus 20 calculates the insurance premiums in the calculation time period (step S1-9) and the child allowance contribution amount (step S1-10). This allows for estimation of the employer share amounts of insurance premiums and the like according to the salary.
(3) The control section 21 of the personnel expense analysis apparatus 20 of the present embodiment obtains the individual work information (step S1-3). The control section 21 also performs the allocation regarding assistance (step S1-12). When an employee assists other division, the personnel expenses to be paid can be estimated with consideration given to the assistance.
(4) The control section 21 of the personnel expense analysis apparatus 20 of the present embodiment performs allocation to the main duty division and the additional duty division (step S1-11). Thus, when an employee concurrently works for a plurality of divisions, the personnel expenses can be appropriately allocated to the divisions, allowing for accurate estimation of personnel expenses.
(5) The control section 21 of the personnel expense analysis apparatus 20 of the present embodiment performs output processing (step S1-13). The management section 211 processes the obtained data of items into a format usable with general spreadsheet software and outputs the data on the output section 10. Thus, items values can be added to a desired item in the simulation result using general-purpose software. This allows for a trial calculation of future personnel expenses.
(6) In the estimation of individual salary payment according to the present embodiment, if an individual salary raise setting is determined to be present (if "YES" in step S2-4), the control section 21 of the personnel expense analysis apparatus 20 sets the amount of increase (step S2-5). If a salary raise setting for the individual is determined to be absent ("NO" in step S2-4), the control section 21 of the personnel expense analysis apparatus 20 repeats the searching for salary raise setting for each upper level organization in sequence from the lower level (step S2-6). If a salary raise setting for a higher level organization is determined to be present ("YES" in step S2-7), the control section 21 of the personnel expense analysis apparatus 20 sets the amount of increase (step S2-5). This allows for calculation of the amount of salary raise for each employee based on the salary raise setting of the employee. In addition, the collective salary raise amount can be obtained based on the salary raise setting of the organization.
(7) In the calculation of health insurance premium (employer share) of the present embodiment, the control section 21 of the personnel expense analysis apparatus 20 determines whether the individual share amount is known (step S4-1). If the individual share amount is determined to be unknown, ("NO" in step S4-1), the control section 21 of the personnel expense analysis apparatus 20 calculates the share amount based on the payment (step S4-2). If it is determined that the individual share amount is known ("YES" in step S4-1), the control section 21 of the personnel expense analysis apparatus 20 obtains the share amount based on the amount of March when the calculation target month is April to September (step S4-4). This enables an approximate calculation of the employer share amount of insurance premiums based on the actual value or an estimated value that has been calculated.
(8) In the calculation of health insurance premium (employer share) of the present embodiment, the control section 21 of the personnel expense analysis apparatus 20 obtains the share amount based on the amount of September when the calculation target month is October (step S4-7). In this process, the amount of increase from the payment of September is multiplied by the insurance premium rate (employer), and the result is added to the amount of September. This facilitates an approximate calculation of the employer share amount of health insurance premiums with consideration given to the amount of increase and using the actual value or an estimated value that has been calculated.
(9) In the calculation of employees' pension insurance premium and employees' pension fund insurance premium (employer share) of the present embodiment, the share amount is calculated based on the amount of March when the calculation target month is April to September (step S5-5). This enables an approximate calculation of the employer share amount of insurance premiums based on the actual value or an estimated value that has been calculated.
(10) In the calculation of employees' pension insurance premium and employees' pension fund insurance premium (employer share) of the present embodiment, the share amount is calculated based on the amount of September when the calculation target month is October (step S5-7). In this process, the amount of increase from the payment of September is multiplied by the insurance premium rate (employer), and the result is added to the amount of September. This facilitates an approximate calculation of the employer share amount of employees' pension insurance and employees' pension fund insurance premiums with consideration given to the amount of increase and using the actual value or an estimated value that has been calculated.

The above embodiment may be modified as follows.

The above embodiment performs visualization and personnel expense simulation. The sum of the personnel expenses from past to present may be displayed seamlessly with the estimation of future personnel expenses. In this case, for the months from past to present in the calculation time period, the control section 21 of the personnel expense analysis apparatus 20 compiles the personnel expenses recorded in the past salary information storage section 23p. For the future months in the calculation time period, the personnel expenses stored in the analysis result storage section 23q are compiled. Thus, the future prediction can be performed reviewing the past actual data. In addition, in the middle of a fiscal year, visualization process of the fiscal year and personnel expense simulation up to the end of the fiscal year may be performed. This allows for estimation of the total amount of the current fiscal year.

If an individual salary raise setting is determined to be present ("YES" in step S2-4), the control section 21 of the personnel expense analysis apparatus 20 sets the amount of increase (step S2-5). Further, if a salary raise setting for a higher level organization is determined to be present ("YES" in step S2-7), the control section 21 of the personnel expense analysis apparatus 20 sets the amount of increase (step S2-5). A salary raise setting may be obtained based on the estimated balance of the company, as with the sales estimations of divisions. In this case, the analysis pattern for balance estimation is registered in the analysis pattern information storage section 23a. In addition, the formula for determining the salary raise contents relative to the balance estimation is registered in the salary raise setting-organization information storage section 23f. This allows for estimation of personnel expenses according to the status of the company.

In the above embodiment, the individual job position information storage section 23k stores the job position history issue date, job position history end date, and job position code of each employee. The job position may be automatically identified. In this case, statistical promotion prediction information for each employee is stored in the personnel expense analysis apparatus 20. The promotion prediction information is used to predict the future job position based on the current job position and job position history issue date.

The above embodiment uses the personnel expense analysis apparatus 20 as the personnel expense simulation system. However, the personnel expense simulation system is not limited to the personnel expense analysis apparatus 20, which is installed in the company (on-premises). A cloud computing service may be used in which a client terminal in the company is connected via a network to a server that performs the personnel expense simulation method.

The above embodiment performs personnel expense simulation using information stored in various storage sections. The simulation may be performed with consideration given to the staff required to newly expand an organization.

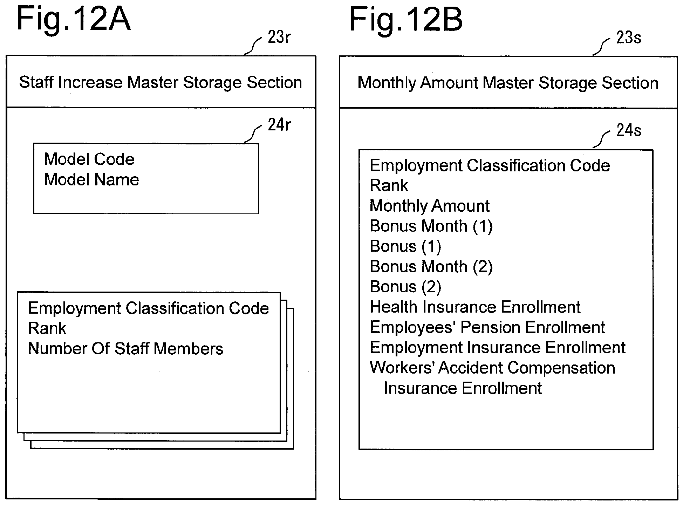

In this case, as shown in Fig. 12, the personnel expense analysis apparatus 20 includes a staff increase master storage section 23r and a monthly amount master storage section 23s.

As shown in Fig. 12A, the staff increase master storage section 23r stores staff increase master records 24r of staff increase models used when the number of staff members is increased in an organization. A staff increase master record 24r is recorded when a model is registered. The staff increase master record 24r includes the pattern code, model code, model name, and employment classification code, rank, and number of staff members to be increased in the model.

The pattern code data area stores data on the identifier for identifying the pattern used in personnel expense simulation. The following data is stored for each pattern.

The model code data area stores data on the identifier for identifying the model that defines a staff increase pattern.

The model name data area stores data on the model name.

The employment classification code data area stores data on the identifier for identifying the contract type of the staff to be increased in the model. The employment classifications include permanent employee, contract employee, dispatched employee, temporary employee, part-time employee, loaned employee, and the like.

The rank data area stores data on the identifier for identifying the rank that specifies the monthly amount of the employment classification.

The number-of-staff-members data area stores data on the number of staff members to be increased in the employment classification and rank.

As shown in Fig. 12B, the monthly amount master storage section 23s stores monthly amount master records 24s of employees. A monthly amount master record 24s is recorded when a monthly amount for increased staff is registered. The monthly amount master record 24s includes the pattern code, employment classification code, rank, monthly amount, bonus month (1), bonus (1), bonus month (2), bonus (2), health insurance enrollment, employees' pension enrollment, employment insurance enrollment, and workers' accident compensation insurance enrollment.

The pattern code data area stores data on the identifier for identifying the pattern used in personnel expense simulation. The following data is stored for each pattern.

The employment classification code data area stores data on the identifier for identifying the employment classification.

The rank data area stores data on the identifier for identifying the rank of the employment classification.

The monthly amount data area stores data on the amount to be paid to an employee in the employment classification and rank.

The bonus month (1) data area and the bonus (1) data area store data on the month of first bonus and the bonus amount to be paid, respectively.

The bonus month (2) data area and the bonus (2) data area store data on the month of second bonus and the bonus amount to be paid, respectively.

The health insurance enrollment data area, employees' pension enrollment data area, employment insurance enrollment data area, and workers' accident compensation insurance enrollment data area store data on flags for identifying whether enrollment is required for respective insurances and pension.

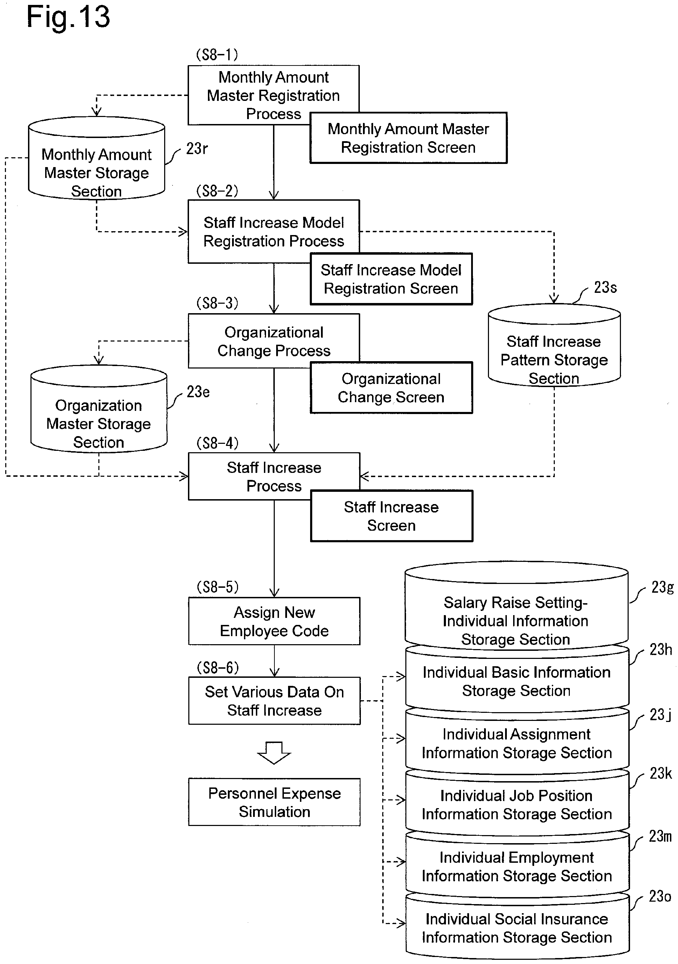

Referring to Fig. 13, the process of increasing staff will now be described. In this process, a person in charge enters a request for staff increase using the input section 11.

First, the control section 21 of the personnel expense analysis apparatus 20 performs the monthly amount master registration process (step S8-1). Specifically, the management section 211 of the control section 21 outputs the monthly amount master registration screen on the output section 10. The monthly amount master registration screen includes the setting fields for entering the employment classification, rank, monthly amount, bonus month, bonus, health insurance enrollment, employees' pension enrollment, employment insurance enrollment, and workers' accident compensation insurance enrollment. When information is entered into setting fields through the input section 11, the management section 211 generates a monthly amount master record 24s and registers the record into the monthly amount master storage section 23s.

The control section 21 of the personnel expense analysis apparatus 20 then performs the staff increase model registration process (step S8-2). Specifically, the management section 211 of the control section 21 outputs the staff increase model registration screen on the output section 10. The staff increase model registration screen includes the setting field for entering the model name, employment classification code, rank, and the number of staff. When information is entered into setting fields through the input section 11, the management section 211 generates a staff increase master record 24r and registers the record into the staff increase master storage section 23r.

Then, the control section 21 of the personnel expense analysis apparatus 20 performs the organizational change process (step S8-3). Specifically, the management section 211 of the control section 21 outputs the organizational change screen on the output section 10. The organizational change screen includes the organization structure field and the setting fields for the attribute information of the organization to be newly registered. The management section 211 obtains the organization master record 24e from the organization master storage section 23e and outputs an organization structure chart (divisions that are superior or subordinate to the division) in the organization structure field. When a new organization is added, the position (layer) of the organization to be added is specified in the organization structure chart. Additionally, the post code and the name of new organization are entered into the setting fields of attribute information. Based on the entered information, the management section 211 generates an organization master record 24e of the new organization and stores the record in the organization master storage section 23e.

Then, the control section 21 of the personnel expense analysis apparatus 20 performs the staff increase process (step S8-4). Specifically, the management section 211 of the control section 21 outputs the staff increase screen on the output section 10. The staff increase screen includes the organization structure display field, staff increase month, staff increase organization field, staff increase model selection field, and staff information edit field. The management section 211 obtains the organization master record 24e from the organization master storage section 23e and outputs an organization structure chart in the organization structure field. Further, the management section 211 obtains the staff increase master record 24r from the staff increase master storage section 23r and displays options in the staff increase model selection field.

The person in charge selects the organization in which staff is increased (staff increase organization) in the organization structure display field. In the present embodiment, a plurality of organizations can be collectively selected. The management section 211 displays, in the staff increase organization filed, the staff increase organization that is selected in the organization structure display field.

When a staff increase model is selected from the options in the staff increase model selection field, the management section 211 outputs the contents of the staff increase master record 24r of the selected staff increase model in the staff information edit field. Then, based on the employment classification and rank of the staff to be increased, the management section 211 obtains information such as monthly amount, bonus, and enrollment in insurance and pension from the monthly amount master storage section 23s and outputs the information in the staff information edit field. The person in charge uses the input section 11 to edit the contents of staff increase (the number of staff members to be increased, employment classification, rank, monthly amount, bonus, enrollment in insurances and workers' accident compensation insurance, and the like).

After detecting that editing of the staff increase contents is completed, the control section 21 of the personnel expense analysis apparatus 20 assigns new employee codes (step S8-5). Specifically, the management section 211 of the control section 21 assigns a new employee code to each employee that is set in the staff information edit field for the staff increase organization.

Then, the control section 21 of the personnel expense analysis apparatus 20 sets various data on staff increase (step S8-6). Specifically, the management section 211 of the control section 21 generates records of each employee and stores the records in respective information storage sections. The records are associated with the newly assigned employee code and generated based on the monthly amount, bonus, and insurance enrollment.

In this process, a salary raise setting-individual record 24g of attributes of the employee is newly generated and stored in the salary raise setting-individual information storage section 23g. The newly assigned employee code is recorded in the employee code data area.

An individual basic record 24h of the basic attributes of the employee is newly generated and stored in the individual basic information storage section 23h. The newly assigned employee code and staff increase month are recorded in the data areas of employee code and company joining date, respectively.

An individual assignment record 24j of the assignment (attribute) of the employee is generated and stored in the individual assignment information storage section 23j. The newly assigned employee code, division code, and staff increase month are recorded in the data areas of employee code, division code, and assignment history issue date, respectively.

An individual job position record 24k of the job position (attribute) of the employee is generated and stored in the individual job position information storage section 23k. The newly assigned employee code and division code are stored in the data areas of employee code, division code, and job position history issue date, respectively.

An individual employment record 24m of the employment state (attribute) of the employee is generated and stored in the individual employment information storage section 23m. The newly assigned employee code, staff increase month, and employment classification are stored in the data areas of employee code, employment contract start date, and employment classification code, respectively.

Based on the information on insurance enrollment, the newly assigned employee code, staff increase month, employee code, health insurance acquisition date, employment insurance acquisition date, employees' pension acquisition date, and workers' accident compensation insurance acquisition date are stored in data areas.

Accordingly, addition of a desired organization and staff increase in each organization can be efficiently performed. Further, personnel expense simulation can be performed with consideration given to staff increase.

The above embodiment estimates future salary payment and insurance premiums of employees to perform personnel expense simulation. However, the items to be estimated for personnel expense simulation are not limited to these items.

For example, reserves for bonuses and reserves for retirement allowances may be included as the labor costs to be paid by the employer. These costs for individuals are calculated by assignment organization and stored in the analysis result storage section 23q.

Further, the costs for dormitory and company housing paid by the company, social gathering costs, club activity costs, costs for congratulation or condolence, employee stock option, and incentives may be included as welfare expenses. The cost for dormitory and company housing paid by company, social gathering costs, and club activity costs for individuals are calculated by assignment organization and by employer. The costs for congratulation or condolence and employee stock option are calculated by employer and stored in the analysis result storage section 23q.

In addition, the defined contribution pension plan premiums may be included. For each individual, the individual share and employer share of the defined contribution pension plan premium are calculated using the amount of increase and increase rate and stored in the analysis result storage section 23q.

The insurance premiums paid by the company may be included. The insurance premiums for individuals paid by the company are calculated by assignment organization and by employer and stored in the analysis result storage section 23q.

The education and training costs, hiring/recruiting costs, and medical checkup costs may be included. For each individual, the individual share and employer share of education and training costs are calculated using the amount of increase and increase rate. The hiring/recruiting costs are calculated by employer. The medical checkup costs for individuals are calculated by employer and stored in the analysis result storage section 23q.

As the costs incurred in staff increase, the costs for supplied computers, uniform, licenses, and company cars may be included. The costs incurred in staff increase for individuals are calculated by assignment organization and by employer and stored in the analysis result storage section 23q.

These labor costs to be paid by the employer may be entered by data transferring from other accounting management system, reading from individual files, or manual input. The future amount of each cost is calculated using the individual settings of rate and amount of increase and decrease from the actual amount in the previous fiscal year and stored in the analysis result storage section 23q.

Items are not limited to the items described above, and other items may be added.

### DESCRIPTION OF THE REFERENCE NUMERALS

10: output section, 11: input section, 20: personnel expense analysis apparatus, 21: control section, 211: management section, 212:salary estimation section, 213:share estimation section, 25: memory, 23a: analysis pattern information storage section, 23b: company setting master storage section, 23c: parameter master storage section, 23d: payment item master storage section, 23e: organization master storage section, 23f: salary raise setting-organization information storage section, 23g: salary raise setting-individual information storage section, 23h: individual basic information storage section, 23j: individual assignment information storage section, 23k: individual job position information storage section, 23m: individual employment information storage section, 23n individual work information storage section 23p: past salary information storage section, 23q: analysis result storage section

## Claims

1. A personnel expense simulation system comprising:
an attribute information storage section that stores assignment division information of each employee in an organization;
a past salary information storage section that stores salary payment history information of each employee; and
a control section that calculates an estimated amount of future personnel expenses,
the personnel expense simulation system being **characterized in that** the control section
identifies, for each employee who belongs to an organization including a plurality of divisions, an assignment division to which the employee belongs in a calculation time period,
calculates an estimated salary amount in the calculation time period based on salary raise information and salary payment history information of the employee in the assignment division,
calculates an estimated amount of insurance premium to be paid by an employer based on an estimated payment in the calculation time period, and
calculates an estimated amount of personnel expenses in the calculation time period for each assignment division based on the estimated salary amount and the estimated amount of insurance premium.

2. The personnel expense simulation system according to claim 1, **characterized by** further comprising a salary raise setting information storage section that stores salary raise setting information of each employee and salary raise setting information of each division, wherein
when the control section obtains individual salary raise setting information of the employee, the control section calculates an estimated salary amount of the employee based on the salary raise setting information, and
when the control section fails to obtain the individual salary raise setting information, the control section identifies a division to which the employee belongs using the attribute information storage section and calculates an estimated salary amount of the employee using salary raise setting information of the division.

3. The personnel expense simulation system according to claim 1 or 2, **characterized by** further comprising an organization information storage section that stores hierarchically organized division information, wherein
when the control section calculates an estimated salary amount using salary raise information to which the employee belongs, the control section identifies a division to which the employee belongs in sequence from a lower layer using the organization information storage section, and calculates an estimated salary amount using salary raise information of a division in a lower-most layer for which salary raise information is recorded.

4. The personnel expense simulation system according to any one of claims 1 to 3, **characterized in that**
the attribute information storage section stores an issue date and an end date of assignment,
the control section computes an organization structure in a calculation target month based on the issue date and the end date, and
the control section calculates an estimated salary amount based on the organization structure.

5. The personnel expense simulation system according to any one of claims 1 to 4, **characterized in that** the control section calculates an amount of increase in insurance premium by multiplying an amount of salary raise of each employee by a social insurance premium rate and calculates an employer share amount by adding the amount of increase to an actual paid amount of social insurance premium of the employee.

6. The personnel expense simulation system according to any one of claims 1 to 5, **characterized in that** when the control section identifies an individual share amount of social insurance premium of each employee in the past salary information storage section, the control section uses the individual share amount as an employer share amount.

7. The personnel expense simulation system according to any one of claims 1 to 6, **characterized in that**
the attribute information storage section stores, for an employee who concurrently works for a plurality of assignment divisions, concurrent duty proportion information of the assignment divisions, and
the control section uses the concurrent duty proportion information to appropriately allocate the estimated amount of personnel expenses to the assignment divisions.

8. The personnel expense simulation system according to any one of claims 1 to 7, **characterized in that**
the control section identifies an employee who belongs to each organization using assignment division information stored in the attribute information storage section, obtains salary payment history information of the employee from the past salary information storage section, and compiles and outputs past salary information of each assignment division.

9. A personnel expense simulation method that uses a personnel expense simulation system comprising:
an attribute information storage section that stores assignment division information of each employee in an organization;
a past salary information storage section that stores salary payment history information of each employee; and
a control section that calculates an estimated amount of future personnel expenses,
the personnel expense simulation method being **characterized in that** the control section
identifies, for each employee who belongs to an organization including a plurality of divisions, an assignment division to which the employee belongs in a calculation time period,
calculates an estimated salary amount in the calculation time period based on salary raise information and salary payment history information of the employee in the assignment division,
calculates an estimated amount of insurance premium to be paid by an employer based on an estimated payment in the calculation time period, and
calculates an estimated amount of personnel expenses in the calculation time period for each assignment division based on the estimated salary amount and the estimated amount of insurance premium.

10. A personnel expense simulation program used in a personnel expense simulation system comprising:
an attribute information storage section that stores assignment division information of each employee in an organization;
a past salary information storage section that stores salary payment history information of each employee; and
a control section that calculates an estimated amount of future personnel expenses,
the personnel expense simulation program being **characterized by** allowing the control section to function as a means that
identifies, for each employee who belongs to an organization including a plurality of divisions, an assignment division to which the employee belongs in a calculation time period,
calculates an estimated salary amount in the calculation time period based on salary raise information and salary payment history information of the employee in the assignment division,
calculates an estimated amount of insurance premium to be paid by an employer based on an estimated payment in the calculation time period, and
calculates an estimated amount of personnel expenses in the calculation time period for each assignment division based on the estimated salary amount and the estimated amount of insurance premium.
